(19) Europäisches Patentamt
European Patent Office
Office européen des brevets

(11) EP 1 452 550 A1

(12) EUROPEAN PATENT APPLICATION
published in accordance with Art. 158(3) EPC

(43) Date of publication:
**01.09.2004 Bulletin 2004/36**

(21) Application number: **02803115.1**

(22) Date of filing: **13.11.2002**

(51) Int Cl.7: **C08F 8/42**, C08F 2/38, C08L 101/00, C08F 220/00

(86) International application number:
**PCT/JP2002/011855**

(87) International publication number:
**WO 2003/042256 (22.05.2003 Gazette 2003/21)**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **14.11.2001 JP 2001349346**

(71) Applicant: **KANEKA CORPORATION**
**Osaka-shi, Osaka 530-8288 (JP)**

(72) Inventors:
- **Ohshiro, Nobuaki**
  **Settsu-shi, Osaka 566-0072 (JP)**
- **Tsuji, Ryotaro**
  **Settsu-shi, Osaka 566-0072 (JP)**
- **Hiiro, Tomoki**
  **Settsu-shi, Osaka 566-0072 (JP)**

(74) Representative: **Jacob, Reuben Ellis et al**
**R G C Jenkins & Co.,**
**26 Caxton Street**
**London SW1H 0RJ (GB)**

# (54) CURABLE COMPOSITION

(57) The present invention provides a curable composition that comprises a polymer (A) containing a cross-linkable silyl group and a condensation catalyst (B). The polymer (A) containing a cross-linkable silyl group is obtained by a process comprising the steps of conducting a radical polymerizable monomer in the presence of a thiocarbonylthio compound. For example, the polymer (A) is obtained by (i) initiating a reversible addition-fragmentation chain transfer polymerization of a radical polymerizable monomer in the presence of a thiocarbonylthio compound, and (ii) adding an unsaturated compound containing a cross-linkable silyl group for copolymerization when a consumed amount of the radical polymerizable monomer by the polymerization has reached a level of 80% or more.

EP 1 452 550 A1

## Description

Technical Field

The present invention relates to a curable composition that comprises a polymer containing a cross-linkable silyl group and a condensation catalyst and provides a cured product having excellent weatherability, and to a resin composition comprising such a curable composition.

Background Art

Curable compositions comprising a moisture curable liquid polymer having a cross-linkable silyl group at its molecular end are used for sealing materials, adhesives, pressure sensitive adhesives, paints, potting materials or the like. As a polymer used in these compositions, for example, polysiloxanes, polyoxypropylenes, and polyisobutylenes are known so far. However, curable compositions containing these polymers pose many problems. For example, compositions containing a polysiloxane have excellent weatherability, heat resistance and cold resistance, but have problems regarding oil resistance, low staining properties, coating properties and gas barrier properties. Compositions containing a polyoxypropylene have low staining properties and have no problem in coating properties, but their weatherability is insufficient. Compositions containing a polyisobutylene have excellent weatherability, low moisture permeability, and good gas barrier properties, but have a high viscosity so that they are difficult to handle, and furthermore moisture-curing takes a long time.
As a moisture curable composition that has excellent heat resistance, weatherability, oil resistance and low staining properties, and can be easily handled, curable compositions having an acrylic polymer having a cross-linkable silyl group at its molecular end as the main component have been proposed.
As methods for producing these compositions, for example, Japanese Patent Publication Nos. 3-14068 and 5-72427 disclose methods including a process of performing radical polymerization of an acrylic monomer, each of the methods employing any one of a mercaptan chain transfer agent having a cross-linkable silyl group, a disulfide chain transfer agent having a cross-linkable silyl group, and an azo polymerization initiator having a cross-linkable silyl group. However, even though polymerization is performed by any one of these production methods, it is difficult to prepare a polymer having a cross-linkable silyl group at its molecular end without fail, and thus, a cured product having satisfactory properties cannot be obtained. Furthermore, since the molecular weight distribution is large, the mechanical properties such as strength or stretchability are insufficient. Furthermore, cross-linkable silyl groups are hydrolyzed, so that aqueous polymerization such as emulsion polymerization or suspension polymerization cannot be performed. In the case where solution polymerization is performed, it is necessary to control moisture strictly. Thus, the production process becomes complicated.
Japanese Patent Publication No. 4-55444 discloses a method of using a hydrosilane having a cross-linkable silyl group or a tetrahalosilane having a cross-linkable silyl group as a chain transfer agent. However, even though this method is employed for polymerization, it is difficult to obtain a polymer having a cross-linkable silyl group at its molecular end at a high yield, so that a cured product having satisfactory properties cannot be obtained. Similarly to the above, since cross-linkable silyl groups are hydrolyzed, aqueous polymerization such as emulsion polymerization or suspension polymerization cannot be performed, and it is also necessary to control moisture strictly in the case where solution polymerization is performed. Thus, the production process becomes complicated.
Japanese Laid-Open Patent Publication No. 6-211922 discloses a method of using a chain transfer agent that is a polysulfide containing a hydroxyl group in an excessive amount with respect to an initiator, so that an acrylic polymer having a hydroxyl group at its molecular end is produced, and thus the hydroxyl group is converted to a cross-linkable silyl group. However, in this method, it is necessary to use the chain transfer agent in a large amount, and this it is not economical.
In order to solve these problems, Japanese Laid-Open Patent Publication No. 11-80571 discloses a method of producing a vinyl polymer having a cross-linkable silyl group at its molecular end by atom transfer radical polymerization using a metal complex as a catalyst. However, in this atom transfer radical polymerization, a metal complex is used as a catalyst, so that purification is necessary after the polymerization. Thus, the process becomes complicated, which reduces the productivity. Also in this method, it is impossible to use aqueous polymerization such as emulsion polymerization or suspension polymerization.

Disclosure of Invention

It is an object of the present invention to provide a curable composition that comprises a vinyl polymer having a cross-linkable silyl group at its molecular end at a high ratio as the main component, that can provide an article having oil resistance, heat resistance, weatherability, low staining properties and low compression set and that can be easily

handled. It is another object of the present invention to provide a curable composition containing the polymer, wherein the polymer is prepared by a simple process that can simplify a purification step and that can be used for aqueous polymerization.

The curable composition of the present invention comprises a polymer (A) containing a cross-linkable silyl group and a condensation catalyst (B); wherein the polymer (A) containing a cross-linkable silyl group is produced by a process comprising the steps of: (i) initiating a reversible addition-fragmentation chain transfer polymerization of a radical polymerizable monomer in the presence of a thiocarbonylthio compound, and (ii) adding an unsaturated compound containing a cross-linkable silyl group for copolymerization when a consumed amount of the radical polymerizable monomer by the polymerization has reached a level of 80% or more; wherein the unsaturated compound containing a cross-linkable silyl group is a compound having a radical polymerizable unsaturated group and a cross-linkable silyl group shown by general formula (1):

$$-[Si(R^1)_{2-b}(Y^1)_bO]_m-Si(R^2)_{3-a}(Y^2)_a \qquad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si-$ (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

In a preferred embodiment, the consumed amount of the radical polymerizable monomer in the step (ii) is 95% or more, because this allows introduction of a cross-linkable silyl group to a molecular end.

Another curable composition of the present invention comprises a polymer (A) containing a cross-linkable silyl group and a condensation catalyst (B), wherein the polymer (A) containing a cross-linkable silyl group is produced by a process comprising the steps of: (I) initiating a reversible addition-fragmentation chain transfer polymerization of a radical polymerizable monomer in the presence of a thiocarbonylthio compound, (II) adding a diene compound for copolymerization when a consumed amount of the radical polymerizable monomer by the polymerization has reached a level of 80% or more so as to prepare a polymer having an unsaturated group; and (III) adding a hydrosilane compound containing a cross-linkable silyl group to the polymer having an unsaturated group so as to cause a hydrosilylation; wherein the hydrosilane compound containing a cross-linkable silyl group is a compound having a hydrosilyl group and a cross-linkable silyl group shown by general formula (1):

$$-[Si(R^1)_{2-b}(Y^1)_bO]_m-Si(R^2)_{3-a}(Y^2)_a \qquad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si-$ (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

In a preferred embodiment, the consumed amount of the radical polymerizable monomer in the step (II) is 95% or more because this allows introduction of a cross-linkable silyl group to a molecular end.

The other curable composition of the present invention comprises a polymer (A) containing a cross-linkable silyl group and a condensaton catalyst (B), wherein the polymer (A) containing a cross-linkable silyl group is produced by a process comprising the steps of: [I] subjecting a radical polymerizable monomer to a reversible addition-fragmentation chain transfer polymerization in the presence of a thiocarbonylthio compound to prepare a polymer having a thiocarbonylthio group, [II] converting the thiocarbonylthio group of the polymer having a thiocarbonylthio group to a mercapto group or a mercaptide group to prepare a polymer having a mercapto group or a mercaptide group; [III] reacting the polymer having a mercapto group or a mercaptide group with an unsaturated compound containing a functional group so as to prepare a polymer having an unsaturated group, wherein the unsaturated compound has a functional group that can form a bond together with a mercapto group or a mercaptide group and has an unsaturated group; and [IV] adding a hydrosilane compound containing a cross-linkable silyl group to the polymer having an unsaturated group so as to cause a hydrosilylation; wherein the hydrosilane compound containing a cross-linkable silyl group is a compound having a hydrosilyl group and a cross-linkable silyl group shown by general formula (1):

$$-[Si(R^1)_{2-b}(Y^1)_bO]_m-Si(R^2)_{3-a}(Y^2)_a \quad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$- (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

In a preferred embodiment, the reaction that converts the thiocarbonylthio group to a mercapto group or a mercaptide group is performed using a treatment agent that is at least one compound selected from the group consisting of a base, an acid, and a hydrogen-nitrogen bond-containing compound.

In a preferred embodiment, the treatment agent is a hydrogen-nitrogen bond containing compound, wherein the compound is at least one compound selected from the group consisting of ammonia, a primary amine having a boiling point of 100°C or less, and a secondary amine having a boiling point of 100°C or less.

In a preferred embodiment, the thiocarbonylthio compound is at least one compound selected from the group consisting of a compound shown by the following general formula (2) and a compound shown by the following general formula (3):

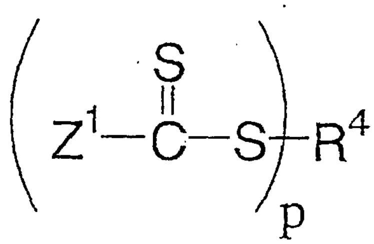

(2)

(wherein $R^4$ is an organic group of a valence of p having at least one carbon atom; $Z^1$ is a hydrogen atom, a halogen atom or a monovalent organic group having at least one carbon atom; p is an integer of 1 or more; and when p is 2 or more, a plurality of $Z^1$ may be the same or different from each other),

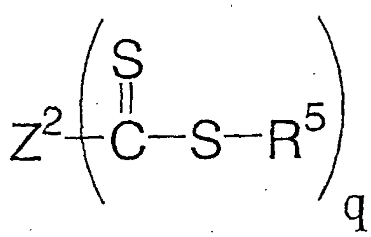

(3)

(wherein $R^5$ is a monovalent organic group having at least one carbon atom; $Z^2$ is an oxygen atom (in the case of q = 2), a sulfur atom (in the case of q = 2), a nitrogen atom (in the case of q = 3) or an organic group of a valence of q having at least one carbon atom; q is an integer of 2 or more; and a plurality of $R^5$ may be the same or different from each other).

In a preferred embodiment, the thiocarbonylthio compound is a compound shown by the following general formula (4):

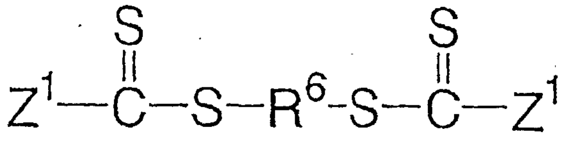

(4)

(wherein $R^6$ is a bivalent organic group having at least one carbon atom; $Z^1$ is a hydrogen atom, a halogen atom, or a monovalent organic group having at least one carbon atom; and $Z^1$ may be the same or different from each other).

In a preferred embodiment, the radical polymerizable monomer is at least one compound selected from the group consisting of an acrylate, a methacrylate, acrylonitrile, methacrylonitrile, vinyl acetate, styrene, $\alpha$-methyl styrene, acrylamide, and methacrylamide.

In a preferred embodiment, a molecular weight distribution (Mw/Mn) that is a ratio of a weight average molecular weight (Mw) to a number average molecular weight (Mn) obtained by gel permeation chromatography of the polymer (A) containing a cross-linkable silyl group is 1.8 or less.

In a preferred embodiment, the number average molecular weight (Mn) obtained by gel permeation chromatography of the polymer (A) containing a cross-linkable silyl group is in a range from 1000 to 100000.

The resin composition of the present invention comprises the above-mentioned curable composition and at least one compound selected from the group consisting of a thermoplastic elastomer and a thermoplastic resin.

Best Mode for Carrying Out the Invention

The curable composition of the present invention comprises a polymer (A) containing a cross-linkable silyl group and a condensation catalyst (B). Hereinafter, the polymer (A) containing a cross-linkable silyl group and the condensation catalyst (B) will be described in this order.

[Outline of polymer (A) containing a cross-linkable silyl group and a method for producing the same]

The cross-linkable group of the polymer (A) having a cross-linkable silyl group contained in the curable composition of the present invention is generally shown by the following general formula (1):

$$-[Si(R^1)_{2-b}(Y^1)_bO]_m-Si(R^2)_{3-a}(Y^2)_a \qquad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$-(wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

There is no particular limitation regarding the hydrolyzable group shown by $Y^1$ or $Y^2$, and it can be any known hydrolyzable group. Specific examples thereof include hydrogen, a halogen atom, an alkoxy group, an acyloxy group, a ketoximate group, an amino group, an amide group, an acid amide group, an aminooxy group, a mercapto group, and an alkenyloxy group. An alkoxy group is more preferable, and a methoxy group or an ethoxy group is even more preferable because of their mild hydrolyzability and easy handling. Such a hydrolyzable group and hydroxyl group can be bonded in the number of 1 to 3 to one silicon atom, and a + mb, that is, the total sum of the hydrolyzable groups is preferably in the range from 2 to 5 in terms of reactivity and availability. m in the formula (1) described above is 0 to 19 in terms of the reactivity and the availability. Examples of the cross-linkable silyl group shown by the formula (1) includes the following groups: a trialkoxysilyl group such as a trimethoxysilyl group, a triethoxysilyl group, a tripropoxysilyl group, a triisopropoxysilyl group, and a tributoxysilyl group; a dialkoxyalkylsilyl group such as a dimethoxymethylsilyl group, a diethoxymethylsilyl group, a dipropoxymethylsilyl group, a dibutoxymethylsilyl group, a dimethoxyethylsilyl group, a diethoxyethylsilyl group, a dipropoxyethylsilyl group, and a dibutoxyethylsilyl group; an alkoxydialkylsilyl group such as a methoxydimethylsilyl group, an ethoxydimethylsilyl group, a propoxydimethylsilyl group, a butoxydimethylsilyl group, a methoxydiethylsilyl group, an ethoxydiethylsilyl group, a propoxydiethylsilyl group, and a butoxydiethylsilyl group and the like.

The polymer (A) containing a cross-linkable silyl group can be obtained by a process including the step of performing radical polymerization of a radical polymerizable monomer (referred to as "radical polymerizable monomer (a1)" or "monomer (a1)" in this specification), in the presence of a thiocarbonylthio compound. Specific methods for producing the same include the following three methods:

Production method 1: copolymerizing an unsaturated compound (a2) containing a cross-linkable silyl group with a radical polymerizable monomer (a1) in the presence of a thiocarbonylthio compound;
Production method 2: copolymerizing a radical polymerizable monomer (a1) and a diene compound (a3) in the presence of a thiocarbonylthio compound, and then performing hydrosilylation; and
Production method 3: polymerizing a radical polymerizable monomer (a1) in the presence of a thiocarbonylthio compound, converting the thiocarbonylthio group of the resultant polymer into a mercapto group or a mercaptide group, introducing an unsaturated group by utilizing the reactivity of the mercapto group or the mercaptide group, and then performing hydrosilylation.

These methods will be described briefly below.

Production method 1

A typical example of the process of preparing polymer (A) containing a cross-linkable silyl group by the production method 1 is shown in scheme 1. The polymer (A) containing a cross-linkable silyl group obtained by this production method may be referred to as "polymer (A-1) containing a cross-linkable silyl group" or "polymer (A-1)" in this specification.

Scheme 1

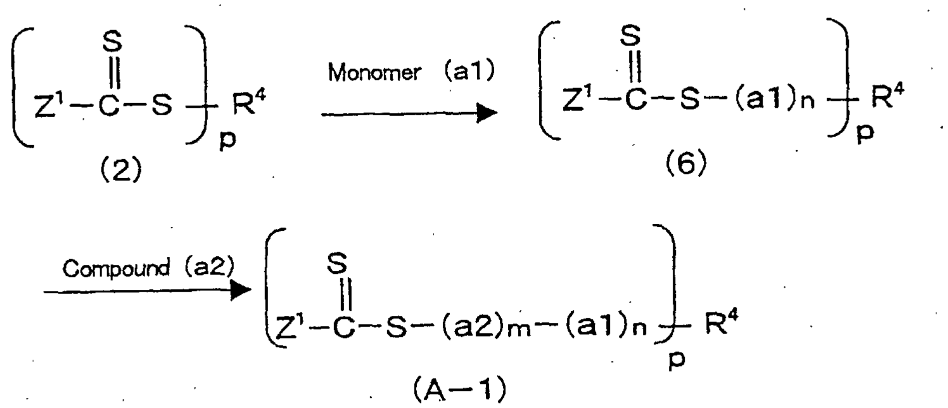

(2)
(6)
(A−1)

Monomer (a1): Radical polymerizable monomer
Compound (a2): Unsaturated compound containing a cross-linkable silyl group

First, a polymerization of the radical polymerizable monomer (a1) is performed in the presence of a thiocarbonylthio compound. In the production method 1, a thiocarbonylthio compound (2), which will be described later, is preferably employed. A polymer (6) having a thiocarbonylthio group is formed by this polymerization (in the scheme above, n and m show the number of bonded monomers). Then, an unsaturated compound (a2) containing a cross-linkable silyl group (described later) is added for copolymerization when the consumed amount of the radical polymerizable monomer (a1) has reached a level of 80% or more, for example, when the reaction of the monomer (a1) has substantially completed, so that a polymer (A-1) containing a cross-linkable silyl group can be obtained. In the polymer (A-1), a cross-linkable silyl group is present in a portion shown as (a2). When the consumed amount of the radical polymerizable monomer (a1) has reached a level of 80% or more, an unsaturated compound (a2) containing a cross-linkable silyl group is added, so that a polymer having a cross-linkable silyl group in the portion shown as (a2) in the scheme 1, that is, the end portion of its molecule, at a high ratio can be obtained.

Production method 2

A typical example of the process of preparing polymer (A) containing a cross-linkable silyl group by the production method 2 is shown in scheme 2. The polymer (A) containing a cross-linkable silyl group obtained by this production method may be referred to as "polymer (A-2) containing a cross-linkable silyl group" or "polymer (A-2)" in this specification.

Scheme 2

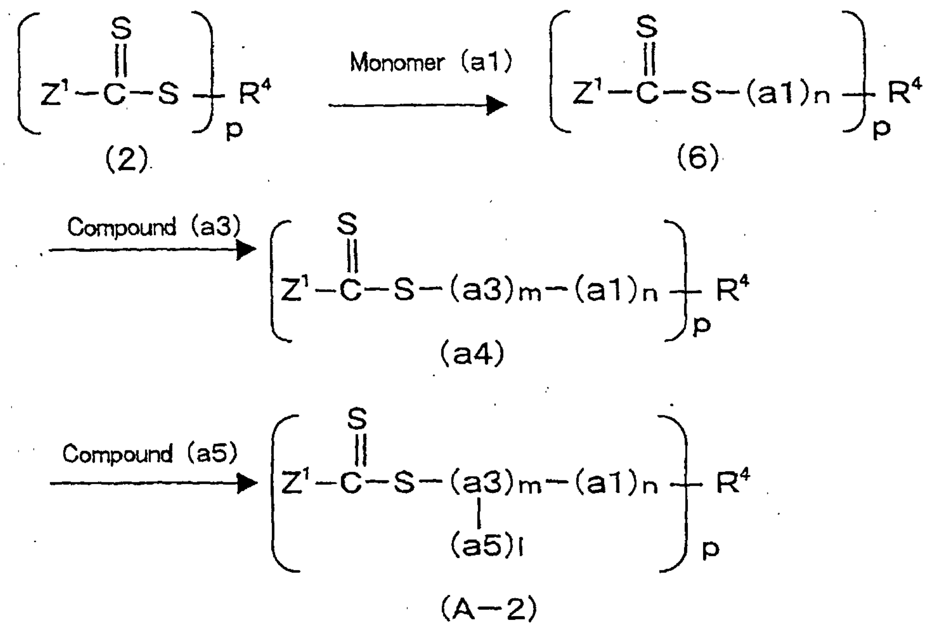


Monomer (a1): Radical polymerizable monomer
Compound (a3): Diene compound
Compound (a5): Hydrosilane compound containing a cross-linkable silyl group

First, a polymerization of the radical polymerizable monomer (a1) is performed in the presence of a thiocarbonylthio compound. Also in the production method 2, the thiocarbonylthio compound (2) is preferably employed. A polymer (6) having a thiocarbonylthio group is produced by this polymerization (in the scheme above, n, m and l show the number of bonded monomers). Then, a diene compound (a3) (described later) is added for copolymerization when the consumed amount of the radical polymerizable monomer (a1) has reached a level of 80% or more, for example, when the reaction of the monomer (a1) has substantially completed, so that a polymer (a4) having an unsaturated group can be obtained. Then, a hydrosilane compound (a5) containing a cross-linkable silyl group (described later), which is a compound having a hydrosilyl group and a cross-linkable silyl group in its molecule, is reacted with the polymer (a4) having an unsaturated group, so that the hydrosilyl group of the hydrosilane compound (a5) containing a cross-linkable silyl group is added to the unsaturated group of the polymer (a4) having an unsaturated group, and thus a polymer (A-2) containing a cross-linkable silyl group is formed. This polymer (A-2) containing a cross-linkable silyl group has a cross-linkable silyl group derived from the hydrosilane compound (a5) containing a cross-linkable silyl group at the end portion of the molecule.

Production method 3

Typical examples of the process of preparing polymer (A) containing a cross-linkable silyl group by the production method 3 are shown in schemes 3 and 4. The polymer (A) containing a cross-linkable silyl group obtained by

this production method may be referred to as "polymer (A-3) containing a cross-linkable silyl group" or "polymer (A-3)" in this specification.

Scheme 3

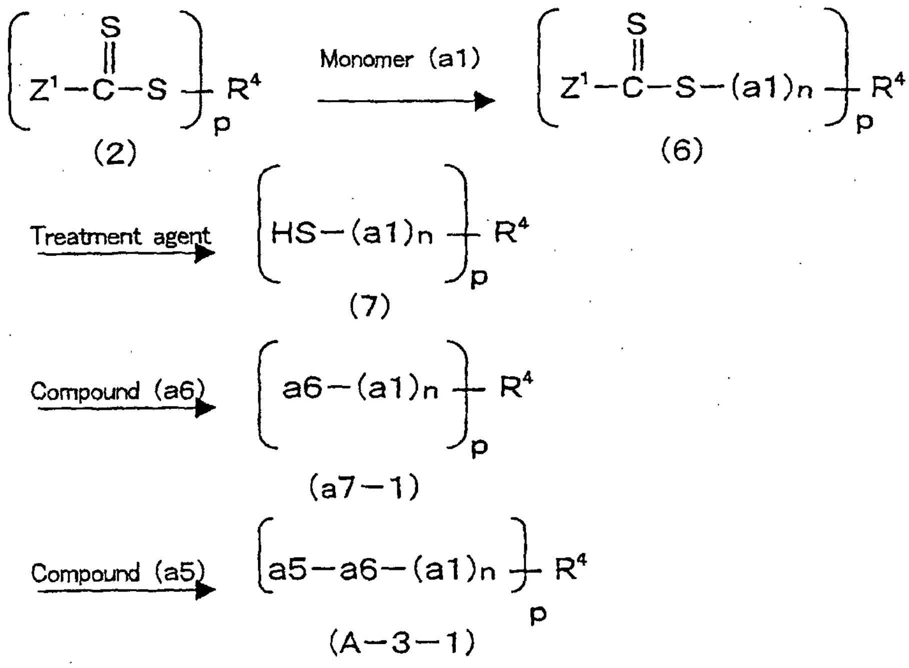


(2) (6) (7) (a7−1) (A−3−1)

Monomer (a1): Radical polymerizable monomer
Compound (a5): Hydrosilane compound containing a cross-linkable silyl group
Compound (a6): Unsaturated compound containing a functional group.

In the scheme 3, a polymerization of the radical polymerizable monomer (a1) is performed in the presence of a thiocarbonylthio compound (2). A polymer (6) having a thiocarbonylthio group (in the scheme above, n shows the number of bonded monomers) is produced by this polymerization. Then, the thiocarbonylthio group of the obtained polymer (6) having a thiocarbonylthio group is converted into a mercapto group or a mercaptide group with a treatment agent (described later) so that a polymer (7) having a mercapto group or a mercaptide group is obtained (in the scheme 3, a polymer having a mercapto group is shown). Then, this polymer (7) is reacted with an unsaturated compound containing a functional group (a6; described later) so that a polymer (a7; shown as a7-1 in the scheme 3) having an unsaturated group at its molecular end is obtained. The polymer (a7-1) having an unsaturated group at its molecular end is reacted with the hydrosilane compound (a5) containing a cross-linkable silyl group, so that a polymer (A-3; shown as A-3-1 in the scheme 3) containing a cross-linkable silyl group is obtained. This polymer (A-3) containing a cross-linkable silyl group has a cross-linkable silyl group derived from the hydrosilane compound (a5) containing a cross-linkable silyl group in the end portion of the molecule.

Scheme 4

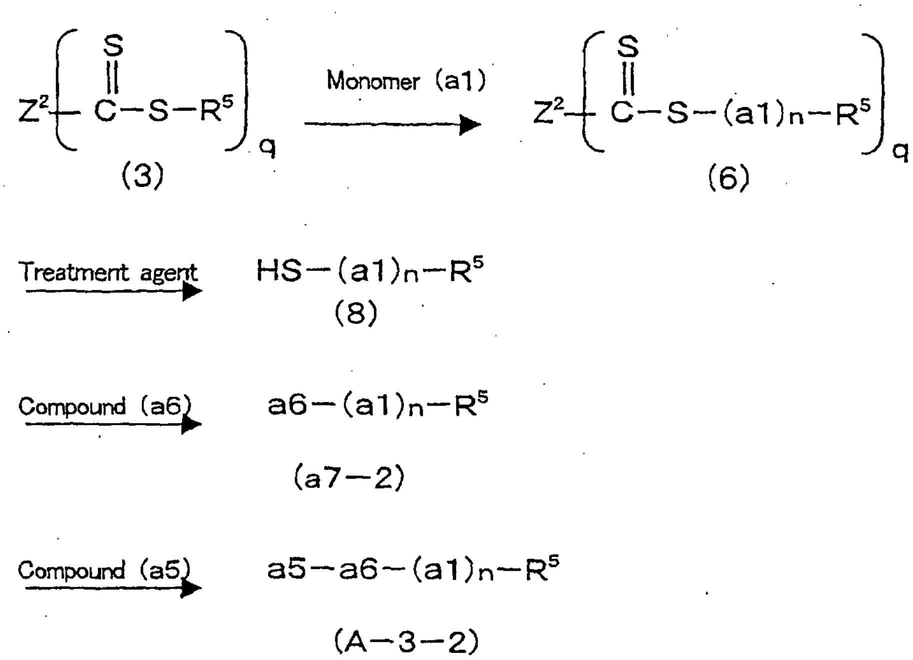


(3) (6) (8) (a7−2) (A−3−2)

Monomer (a1): Radical polymerizable monomer
Compound (a5): Hydrosilane compound containing a cross-linkable silyl group
Compound (a6): Unsaturated compound containing a functional group

In the scheme 4, similarly, a polymerization of the radical polymerizable monomer (a1) is performed in the presence of a thiocarbonylthio compound (3). A polymer (6) having a thiocarbonylthio group (in the scheme above, n shows the number of bonded monomers) is produced by this polymerization. Then, the thiocarbonylthio group of the obtained polymer (6) having a thiocarbonylthio group is converted into a mercapto group or a mercaptide group with a treatment agent so that a polymer (8) having a mercapto group or a mercaptide group is obtained (in the scheme 4, a polymer having a mercapto group is shown). Then, this polymer (8) is reacted with an unsaturated compound containing a functional group (a6; described later) so that a polymer (a7; shown as a7-2 in the scheme 4) having an unsaturated group at its molecular end is obtained. The polymer (a7-2) having an unsaturated group at its molecular end is reacted with the hydrosilane compound (a5) containing a cross-linkable silyl group, so that a polymer (A-3; shown as A-3-2 in the scheme 4) containing a cross-linkable silyl group is obtained. This polymer (A) containing a cross-linkable silyl group has a cross-linkable silyl group derived from the hydrosilane compound (a5) containing a cross-linkable silyl group in the end portion of the molecule.

[Thiocarbonylthio compound]

The thiocarbonylthio compound used to prepare the polymer (A) containing a cross-linkable silyl group contained in the composition of the present invention is at least one selected from the group consisting of the compounds shown by general formula (2):

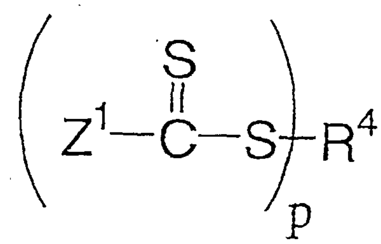

(2)

(wherein $R^4$ is an organic group of a valence of p having at least one carbon atom, and the organic group of a valence of p may have at least one selected from the group consisting of a nitrogen atom, an oxygen atom, a sulfur atom, a halogen atom, a silicon atom, a phosphorus atom and a metal atom and may be a polymeric structure; $Z^1$ is a hydrogen atom, a halogen atom or a monovalent organic group having at least one carbon atom, and the monovalent organic group may have at least one selected from the group consisting of a nitrogen atom, an oxygen atom, a sulfur atom, a halogen atom, a silicon atom, and a phosphorus atom and may be a polymeric structure; p is an integer of 1 or more; when p is 2 or more, a plurality of $Z^1$ may be the same or different from each other), and a compound shown by general formula (3):

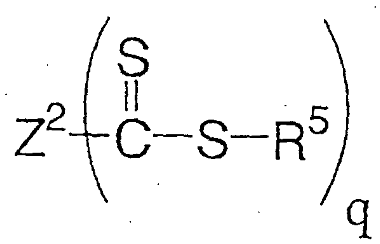

(3)

(wherein $R^5$ is a monovalent organic group having at least one carbon atom, and the monovalent organic group may have at least one selected from the group consisting of a nitrogen atom, an oxygen atom, a sulfur atom, a halogen atom, a silicon atom, a phosphorus atom and a metal atom and may be a polymeric structure; $Z^2$ is an oxygen atom (in the case of q = 2), a sulfur atom (in the case of q = 2), a nitrogen atom (in the case of q = 3) or an organic group of a valence of q having at least one carbon atom, and the organic group of a valence of q may have at least one selected from the group consisting of a nitrogen atom, an oxygen atom, a sulfur atom, a halogen atom, a silicon atom, and a phosphorus atom and may be a polymeric structure; q is an integer of 2 or more; and a plurality of $R^5$ may be the same or different from each other).

In the thiocarbonylthio compound (2), there is no limitation regarding $R^4$. An alkyl group having 4 to 20 carbon atoms, a substituted alkyl group having 2 to 20 carbon atoms, an aralkyl group having 7 to 30 carbon atoms, a substituted aralkyl group having 7 to 30 carbon atoms, an aliphatic hydrocarbon group of a valence of at least 2, an aromatic hydrocarbon group of a valence of at least 2, an aliphatic hydrocarbon group of a valence of at least 2 having an aromatic ring, an aromatic hydrocarbon group of a valence of at least 2 having an aliphatic group, an aliphatic hydrocarbon group of a valence of at least 2 having a hetero atom, an aromatic substituted hydrocarbon group of a valence of at least 2 having a hetero atom, and the like are preferable in terms of polymerization activities and availability. The following groups are preferable in terms of the availability of the compound: a benzyl group, a 1-phenylethyl group, a 2-(2-phenyl)propyl group, a 1-acetoxyethyl group, a 1-(4-methoxyphenyl)ethyl group, an ethoxycarbonylmethyl group, a 2-(2-ethoxycarbonyl)propyl group, a 2-(2-cyano)propyl group, a t-butyl group, a 1,1,3,3-tetramethylbutyl group, a 2-[2-(p-chlorophenyl)]propyl group, a vinylbenzyl group, a t-butylsulfide group, a 2-carboxylethyl group, a carboxylmethyl group, a cyanomethyl group, a 1-cyanoethyl group, a 2-(2-cyano)butyl group and the like, and an organic group as shown by the following general formula:

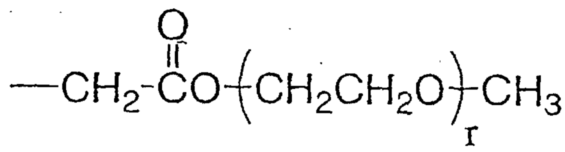

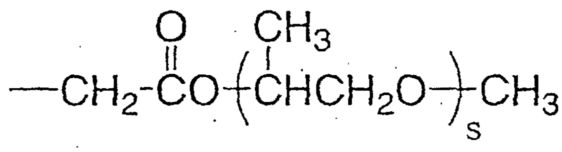

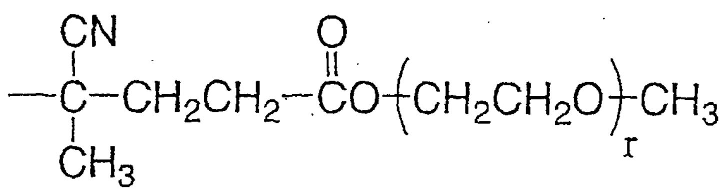

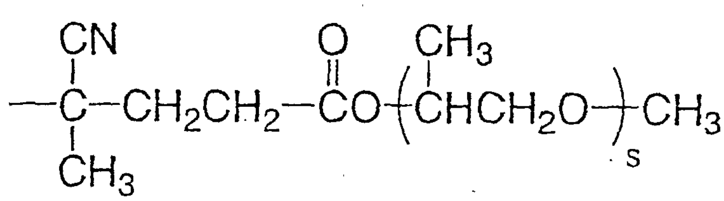

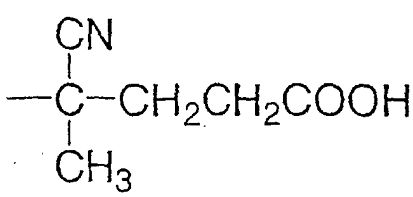

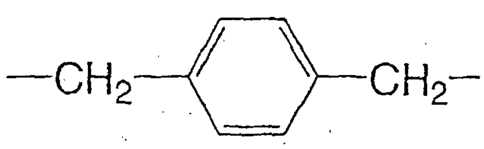

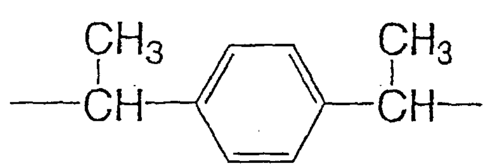

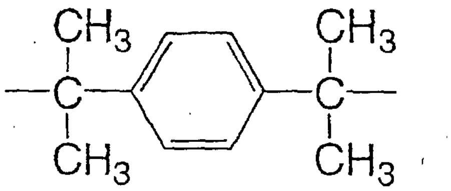

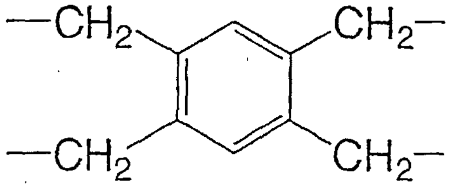

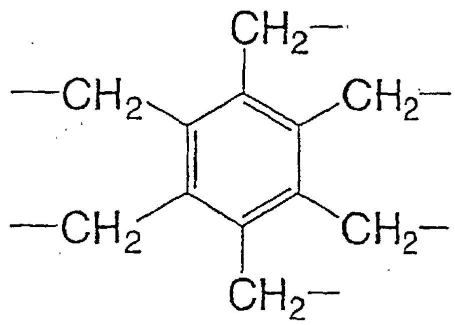

wherein r is an integer of 0 or more, and s is an integer of 1 or more. It is preferable that r and s in the above formula are 500 or less, in terms of the availability of the compound.

Furthermore, $R^4$ may be a polymeric structure as described above, and examples thereof include a hydrocarbon group having a poly(ethylene oxide) structure, a hydrocarbon group having a poly(propylene oxide) structure, a hydrocarbon group having a poly(tetramethylene oxide) structure, a hydrocarbon group having a poly(ethylene terephthalate) structure, a hydrocarbon group having a poly(butylene terephthalate) structure, a hydrocarbon group having a polydimethylsiloxane structure, a hydrocarbon group having a polycarbonate structure, a hydrocarbon group having a polyethylene structure, a hydrocarbon group having a polypropylene structure, and a hydrocarbon group having a polyacrylonitrile structure. These hydrocarbon groups may have at least one selected from the group of an oxygen atom, a nitrogen atom and a sulfur atom, and may have a cyano group, an alkoxy group and the like. The molecular weight thereof is generally 500 or more. Hereinafter, in the present invention, the polymeric structure refers to the above-described groups.

There is no particular limitation regarding $Z^1$ of the thiocarbonylthio compound (2). The following groups are preferable in terms of polymerization activities and availability: an alkyl group having 1 to 20 carbon atoms, a substituted alkyl group having 1 to 20 carbon atoms, an aralkyl group having 7 to 30 carbon atoms, a substituted aralkyl group having 7 to 30 carbon atoms, a N-alkyl-N-arylamino group having 7 to 30 carbon atoms, a N, N-diarylamino group having 12 to 30 carbon atoms, a nitrogen containing heterocyclic group having 4 to 30 carbon atoms, a thioalkyl group having 2 to 20 carbon atoms, a thioaryl group having 6 to 30 carbon atoms, and an alkoxy group having 1 to 20 carbon atoms. The following groups are preferable in terms of the availability of the compound: a phenyl group, a methyl group, an ethyl group, a benzyl group, a 4-chlorophenyl group, a 1-naphthyl group, a 2-naphthyl group, a diethoxyphosphinyl group, a n-butyl group, a t-butyl group, a methoxy group, an ethoxy group, a thiomethyl group (methyl sulfide), a phenoxy group, a thiophenyl group (phenyl sulfide), a N,N-dimethylamino group, a N,N-diethylamino group, a N-phenyl-N-methylamino group, a N-phenyl-N-ethylamino group, a thiobenzyl group (benzyl sulfide), a pentafluorophenoxy group, and an organic group as shown by the following formula:

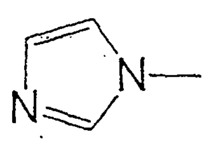

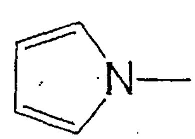

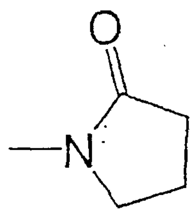

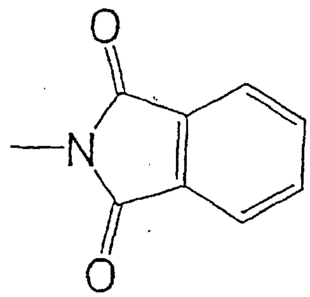

$-SCH_2CN$

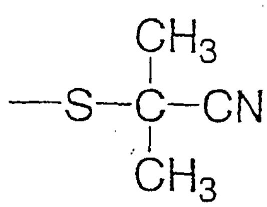

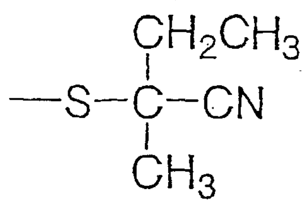

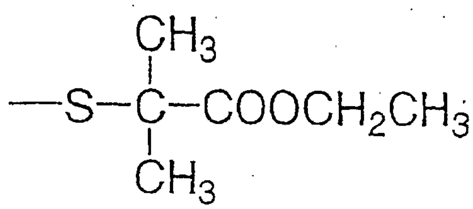

There is no particular limitation regarding $R^5$ of the thiocarbonylthio compound (3). The following groups are preferable in terms of polymerization activities and availability: an alkyl group having 4 to 20 carbon atoms, a substituted alkyl group having 2 to 20 carbon atoms, an aralkyl group having 7 to 30 carbon atoms and a substituted aralkyl group having 7 to 30 carbon atoms. The following groups are preferable in terms of the availability of the compound: a benzyl group, a 1-phenylethyl group, a 2-(2-phenyl)propyl group, a 1-acetoxyethyl group, a 1-(4-methoxyphenyl)ethyl group, an ethoxycarbonylmethyl group, a 2-(2-ethoxycarbonyl)propyl group, a 2-(2-cyano) propyl group, a t-butyl group, a 1,1,3,3-tetramethylbutyl group, a 2-[2-(p-chlorophenyl]propyl group, a vinylbenzyl group, a t-butylsulfide group, a 2-carboxylethyl group, a carboxylmethyl group, a cyanomethyl group, a 1-cyanoethyl group, a 2-(2-cyano)butyl group, and an organic group as shown by the following general formula:

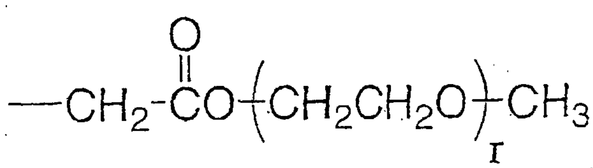

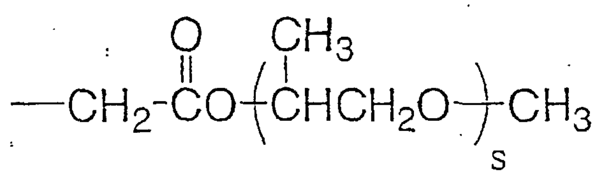

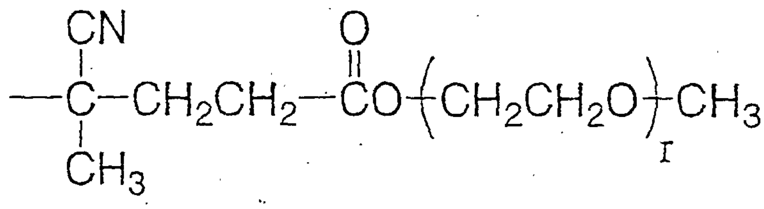

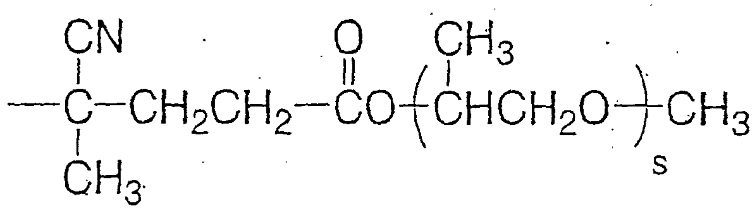

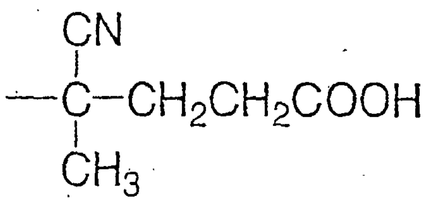

wherein r is an integer of 0 or more, and s is an integer of 1 or more. It is preferable that r and s in the above formula are 500 or less, in terms of the availability of the compound.

There is no particular limitation regarding $Z^2$ of the thiocarbonylthio compound (3). An organic substituted group shown by the following formula is preferable in terms of polymerization activities and availability:

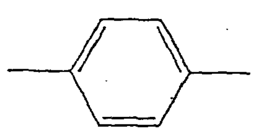

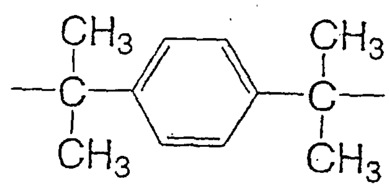

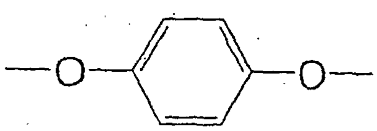

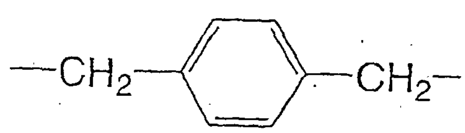

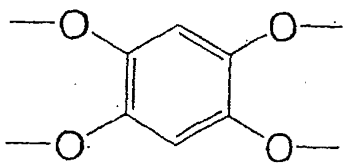

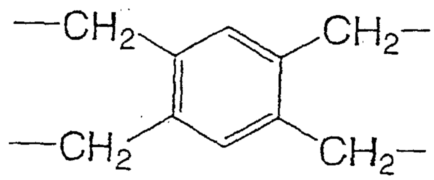

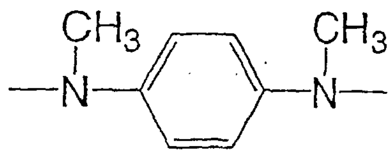

$$-(CH_2)_s-$$

$$-O-(CH_2CH_2O)_r-$$

$$-O-(CH(CH_3)CH_2O)_r-$$

wherein r is an integer of 0 or more, and s is an integer of 1 or more.

Specific examples of the thiocarbonylthio compound used in the present invention include, but are not limited to, compounds shown by the following formulae:

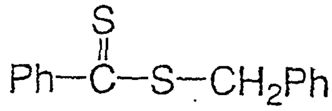

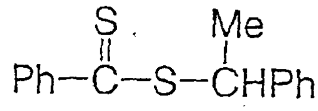

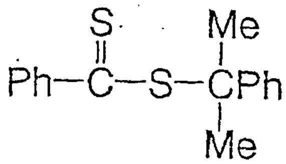

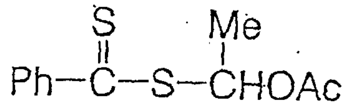

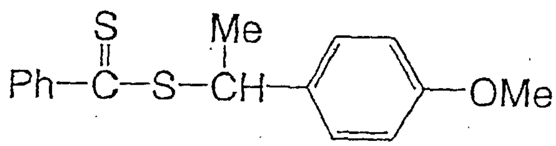

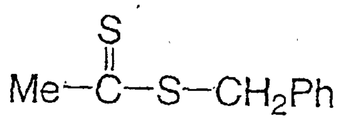

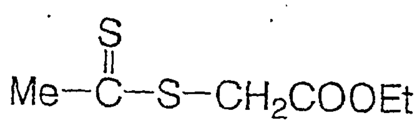

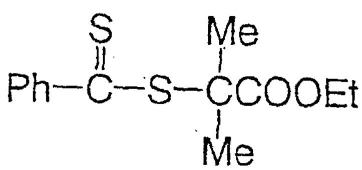

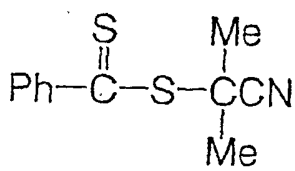

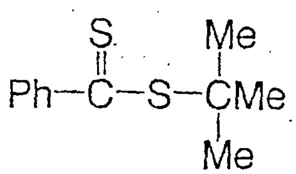

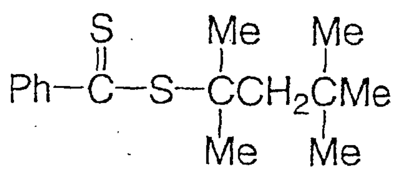

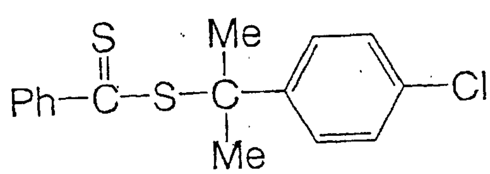

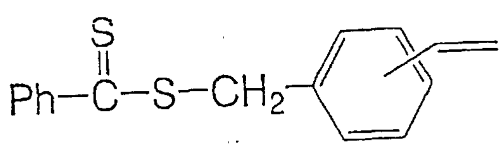

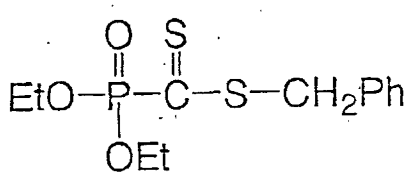

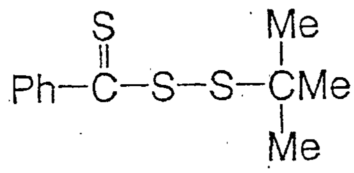

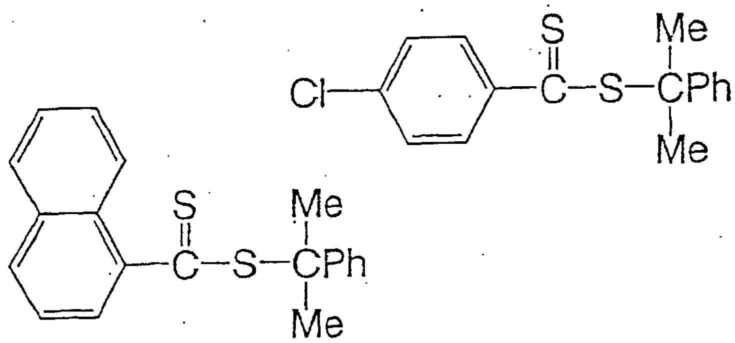

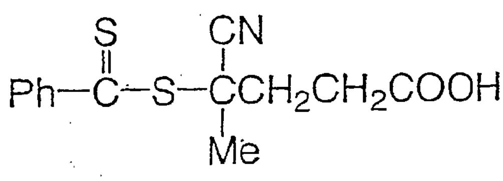

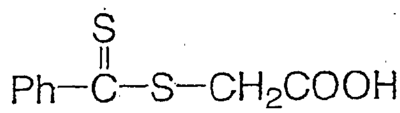

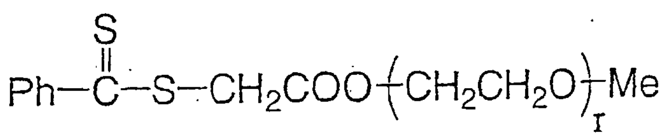

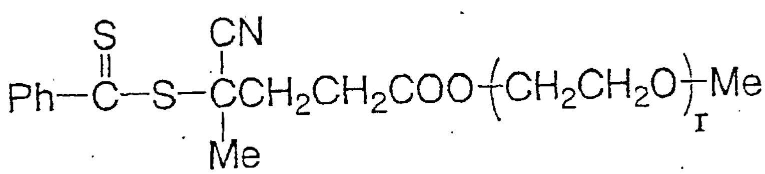

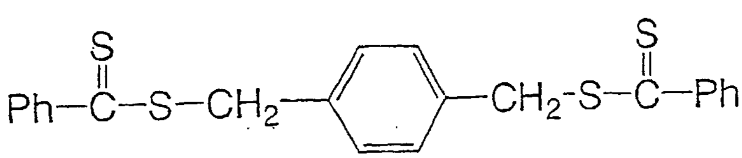

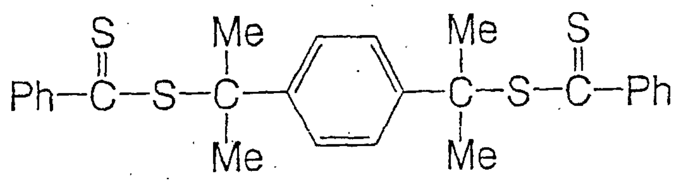

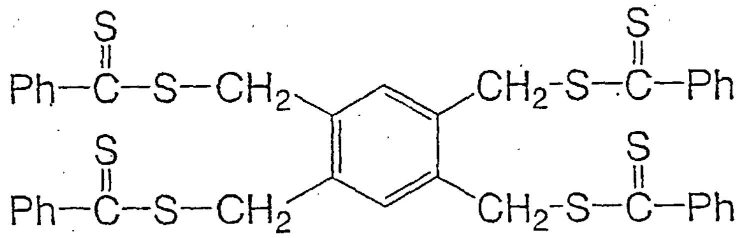

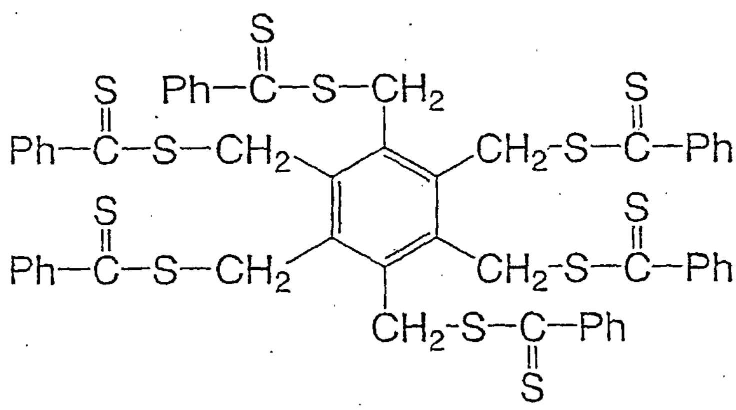

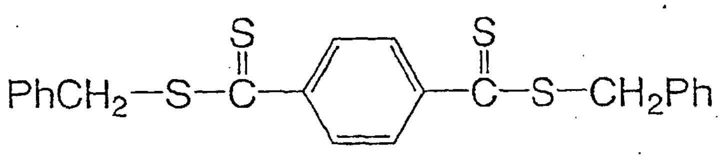

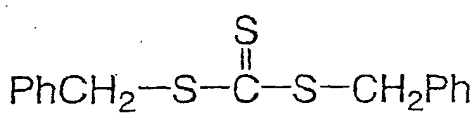

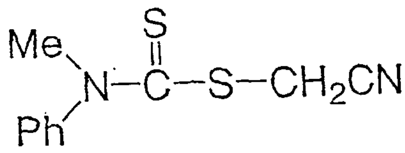

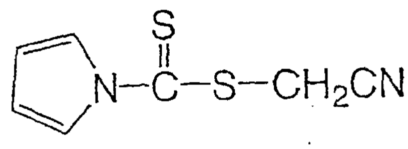

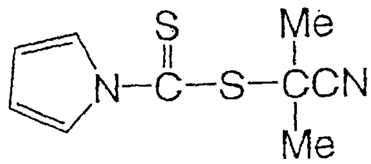

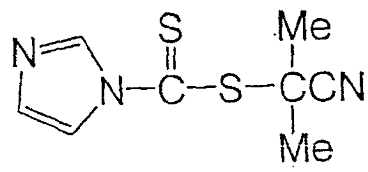

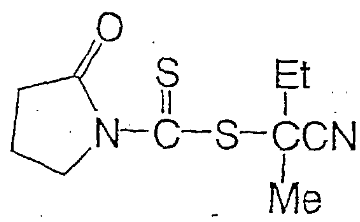

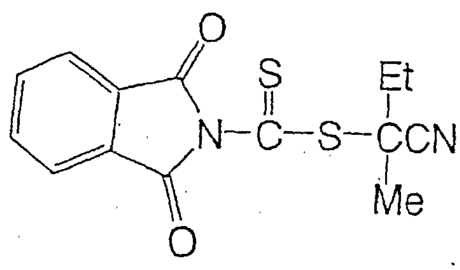

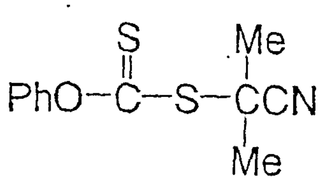

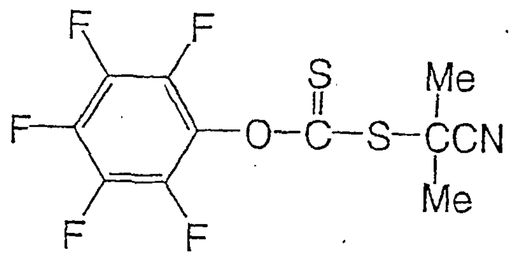

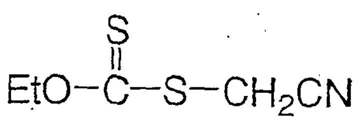

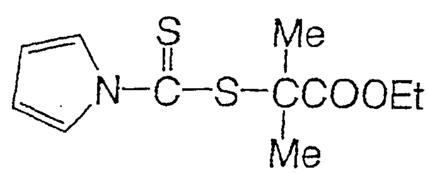

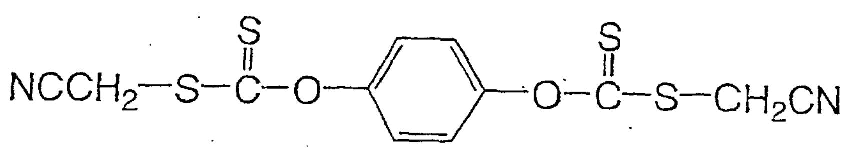

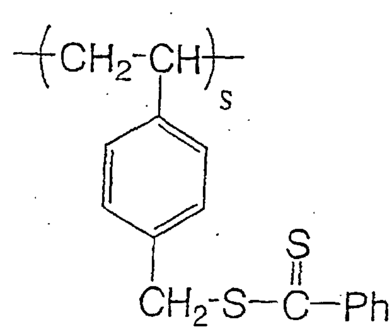

In the above formulae, Me is a methyl group, Et is an ethyl group, Ph is a phenyl group, Ac is an acetyl group, r is an integer of 0 or more, and s is an integer of 1 or more. It is preferable that each of and s in the above formula is 500 or less, in terms of the availability of the compound.

Among the thiocarbonylthio compounds used in the present invention, it is preferable to employ a compound of formula (2) having p of 2 or more; because a polyfunctional polymer containing a cross-linkable silyl group can be produced. In particular, the following compound shown by formula (4) is more preferable, because a telechelic polymer containing a cross-linkable silyl group, which provides a curable composition having good properties can be produced:

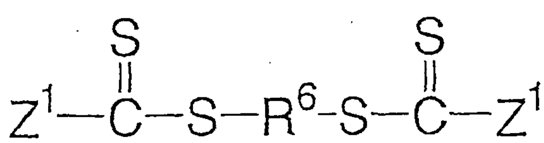

(4)

(wherein $R^6$ is a bivalent organic group having at least one carbon atom, and the bivalent organic group may have at least one selected from the group of a nitrogen atom, an oxygen atom, a sulfur atom, a halogen atom, a silicon atom, a phosphorus atom and a metal atom and may be a polymeric structure; $Z^1$ is a hydrogen atom, a halogen atom, or a monovalent organic group having at least one carbon atom, and the monovalent organic group may have at least one selected from the group of a nitrogen atom, an oxygen atom, a sulfur atom, a halogen atom, a silicon atom, and a phosphorus atom and may be a polymeric structure; and $Z^1$ may be the same or different from each other).

There is no particular limitation regarding $R^6$ in the structure of the thiocarbonylthio compound. A group shown by the following formula is preferable in terms of polymerization activities and availability of the compound:

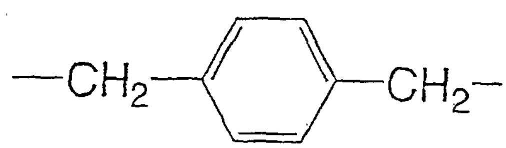

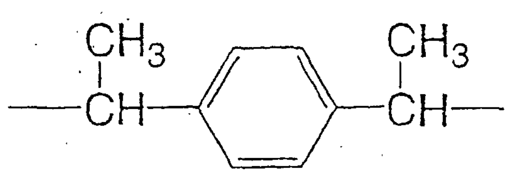

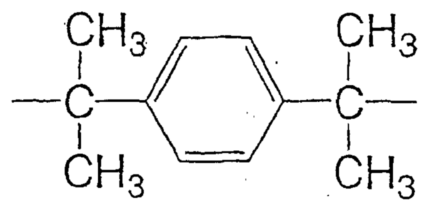

There is no particular limitation regarding $Z^1$ in the structure of the thiocarbonylthio compound (4). The following groups are preferable in terms of polymerization activities and availability of the compound: an alkyl group having 1 to 20 carbon atoms, a substituted alkyl group having 1 to 20 carbon atoms, an aralkyl group having 7 to 30 carbon atoms, a substituted aralkyl group having 7 to 30 carbon atoms, an N-alkyl-N-arylamino group having 7 to 30 carbon atoms, an N, N-diarylamino group having 12 to 30 carbon atoms, a nitrogen containing heterocyclic group having 4 to 30 carbon atoms, a thioalkyl group having 2 to 20 carbon atoms, a thioaryl group having 6 to 30 carbon atoms, and an alkoxy group having 1 to 20 carbon atoms. The following groups are preferable in terms of the availability of the compound: a phenyl group, a methyl group, an ethyl group, a benzyl group, a 4-chlorophenyl group, a 1-naphthyl group, a 2-naphthyl group, a diethoxyphosphinyl group, a n-butyl group, a t-butyl group, a methoxy group, an ethoxy group, a thiomethyl group (methyl sulfide), a phenoxy group, a thiophenyl group (phenyl sulfide), a N,N-dimethylamino group, an N,N-diethylamino group, an N-phenyl-N-methylamino group, an N-phenyl-N-ethylamino group, a thiobenzyl group (benzyl sulfide), a pentafluorophenoxy group, and an organic substituted group as shown by the following formula:

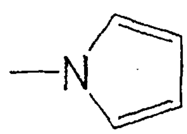

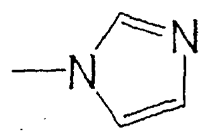

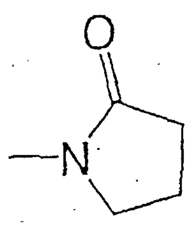

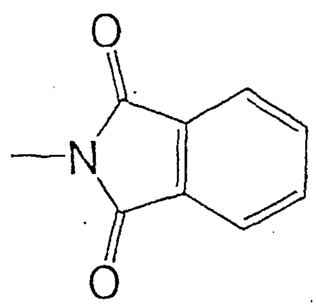

$$-SCH_2CN$$

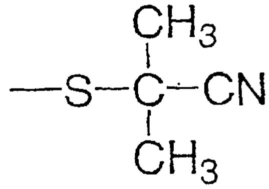

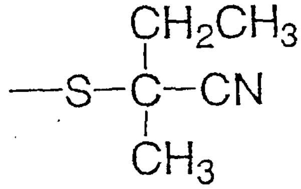

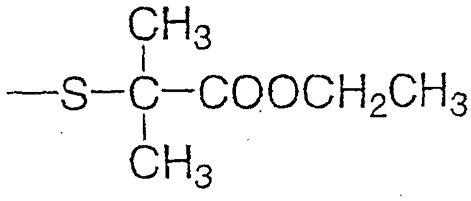

As the thiocarbonylthio compound (4) that can produce a telechelic polymer (i.e., a polymer having functional groups at its both molecular ends) containing a cross-linkable silyl group, the compounds shown by the following formulae are more preferable in terms of polymerization activities and availability:

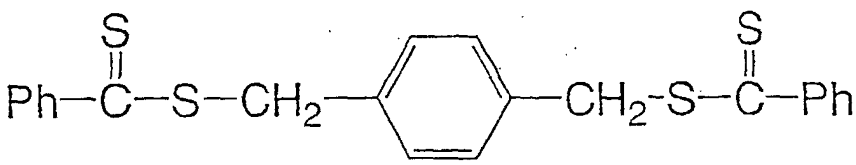

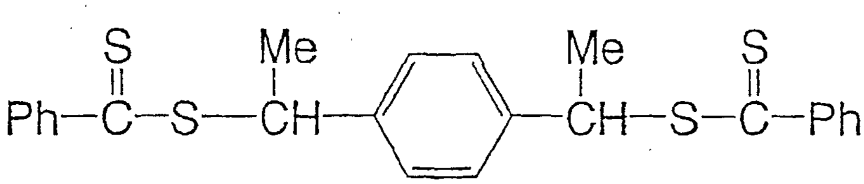

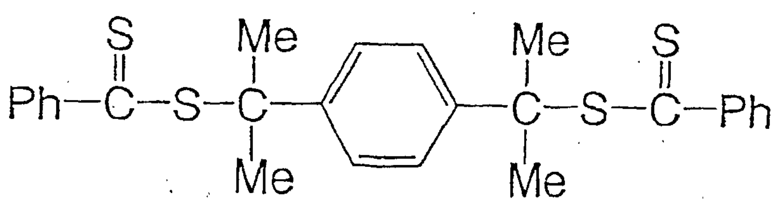

wherein Me is a methyl group and Ph is a phenyl group.

There is no particular limitation regarding the amount of the thiocarbonylthio compound to be used in the present invention. The polymerization degree of the resultant polymer depends on the number of moles used, and therefore the amount of the compound to be used can be calculated and determined from the polymerization degree or the number average molecular weight of the desired polymer. In general, when a radical polymerizable monomer is polymerized in the presence of a thiocarbonylthio compound, the following relationship is satisfied between the number of moles of the thiocarbonylthio compound and the polymerization degree of the resultant polymer:

Polymerization degree = the number of moles of the radical polymerizable monomer /the number of moles of the compound of a thiocarbonylthio group

The number average molecular weight of the polymer can be calculated by multiplying the molecular weight of the radical polymerizable monomer by the polymerization degree. Therefore, according to the relationship, and taking the properties of a desired polymer (A) containing a cross-linkable silyl group into consideration, the kind and the amount of the thiocarbonylthio compound to be used can be determined.

The thiocarbonylthio compound can be used alone or in combination of two or more.

[Radical polymerizable monomer (a1)]

There is no particular limitation regarding the radical polymerizable monomer (a1) used in the present invention, and for example, the following compounds can be used: methacrylate such as methyl methacrylate, ethyl methacrylate, n-butyl methacrylate, isobutyl methacrylate, t-butyl methacrylate, 2-ethylhexyl methacrylate, lauryl methacrylate, tridecyl methacrylate, stearyl methacrylate, cyclohexyl methacrylate, benzyl methacrylate, 2-hydroxyethyl methacrylate, 2-hydroxypropyl methacrylate, dimethylaminoethyl methacrylate, diethylaminoethyl methacrylate, glycidyl methacrylate, tetrahydrofurfuryl methacrylate, ethylene glycol dimethacrylate, triethylene glycol dimethacrylate, tetraethylene glycol dimethacrylate, 1,3-butylene glycol dimethacrylate, trimethylolpropane trimethacrylate, isopropyl methacrylate, pentyl methacrylate, hexyl methacrylate, heptyl methacrylate, octyl methacrylate, nonyl methacrylate, decyl methacrylate, phenyl methacrylate, toluyl methacrylate, isobornyl methacrylate, 2-methoxyethyl methacrylate, 3-methoxybutyl methacrylate, 2-aminoethyl methacrylate, 2-methacryloyloxypropyl trimethoxysilane, 2-methacryloyloxypropyl dimethoxymethylsilane, trifluoromethyl methacrylate, pentafluoroethyl methacrylate, and 2,2,2-trifluoroethyl methacrylate; acrylates such as methyl acrylate, ethyl acrylate, n-propyl acrylate, isopropyl acrylate, n-butyl acrylate, hexyl acrylate, 2-ethylhexyl acrylate, cyclohexyl acrylate, octyl acrylate, decyl acrylate, phenyl acrylate, toluyl acrylate, benzyl acrylate, isobornyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-acryloyloxypropyl dimethoxymethylsilane, 2-acryloyloxypropyl trimethoxysilane, trifluoromethyl acrylate, pentafluoroethyl acrylate, 2,2,2-trifluoroethyl acrylate, 3-dimethylaminoethyl acrylate, isobutyl acrylate, 4-hydroxybutyl acrylate, t-butyl acrylate, lauryl acrylate, alkyloyl modified dipentaerythritol acrylate, ethylene oxide modified bisphenol A diacrylate, carbitol acrylate, ε-caprolactone modified dipentaerythritol acrylate, caprolactone modified tetrahydrofurfuryl acrylate, diacrylate of caprolactone modified neopentylglycol hydroxypivalate ester, ditrimethylolpropane tetraacrylate, dipentaerythritol hexaacrylate, dipentaerythritol pentaacrylate, tetraethylene glycol acrylate, tetrahydrofurfuryl acrylate, tripropylene glycol acrylate, trimethylolpropane ethoxytriacrylate, trimethylolpropane triacrylate, neopentylglycol diacrylate, neopentylglycol hydroxypivalate diacrylate, 1,9-nonanediol acrylate, 1,4-butanediol acrylate, 2-propenoic acid[2·[1,1-dimethyl-2-[(1-oxo-2-propenyl)oxy]ethyl]-5-ethyl-1, 3-dioxan-5-yl]methyl ester, 1,6-hexanediol acrylate, pentaerythritol triacrylate, 2-acryloyloxypropyl hydrogen phthalate, methyl 3-methoxy acrylate, and allyl acrylate; aromatic alkenyl compounds such as styrene, α-methylstyrene, p-methylstyrene, p-methoxystyrene, divinylbenzene, and vinylnaphthalene; vinyl cyanide compounds such as acrylonitrile and methacrylonitrile; conjugated diene compounds such as butadiene and isoprene; halogen-containing unsaturated compounds such as vinyl chloride, vinylidene chloride, tetrafluoroethylene, hexafluoropropylene, vinylidene fluoride, vinyl bromide, and chloroprene; silicon-containing unsaturated compounds such as vinyl trimethoxysilane, vinyl triethoxysilane, vinyl trimethylsilane, vinyl triphenylsilane, and vinyl triethylsilane; unsaturated dicarboxylic acid compounds such as maleic anhydride, maleic acid, maleic acid monoester, maleic acid diester, fumaric acid, fumaric acid monoester, and fumaric acid diester; vinyl ester compounds such as vinyl acetate, vinyl propionate, vinyl pivalate, vinyl benzoate, vinyl cinnamate, divinyl carbonate, vinylethyl carbonate, and vinylphenyl carbonate; allyl ester compounds such as allyl acetate, allyl propionate, allyl pivalate, allyl benzoate, allyl cinnamate, diallyl carbonate, allylmethyl carbonate, and allylphenyl carbonate; unsaturated group-containing ether compounds such as vinylphenyl ether, vinylethyl ether, divinyl ether, trimethylolpropane monovinyl ether, trimethylolpropane divinyl ether, trimethylolpropane trivinyl ether, pentaerythritol monovinyl ether, pentaerythritol divinyl ether, pentaerythritol trivinyl ether, pentaerythritol tetravinyl ether, 1,4-butanediol monovinyl ether, 1,4-butanediol divinyl ether, ethylene glycol monovinyl ether, ethylene glycol divinyl ether, propylene glycol monovinyl ether, propylene glycol divinyl ether, polyethylene glycol monovinyl ether, polyethylene glycol divinyl ether, polypropylene glycol monovinyl ether, polypropylene glycol divinyl ether, vinyl glycidyl ether, allyl phenyl ether, allyl ethyl ether, diallyl ether, vinyl allyl ether, trimethylolpropane monoallyl ether, trimethylolpropane diallyl ether, trimethylolpropane triallyl ether, pentaerythritol monoallyl ether, pentaerythritol diallyl ether, pentaerythritol triallyl ether, pentaerythritol tetraallyl ether, 1,4-butanediol monoallyl ether, 1,4-butanediol diallyl ether, ethylene glycol monoallyl ether, ethylene glycol diallyl ether, propylene glycol monoallyl ether, propylene glycol diallyl ether, polyethylene glycol monoallyl ether, polyethylene glycol diallyl ether, polypropylene glycol monoallyl ether, polypropylene glycol diallyl ether, and allyl glycidyl ether; maleimide compounds such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; acrylic acid, methacrylic acid; acrolein, methacrolein; cyclopolymerizable monomers such as 1,6-heptadiene and diallyl ammonium salts; N-vinylpyrrolidone, and N-vinylcarbazole. These compounds can be used alone or in combination of two or more. When a plurality of radical polymerizable monomers (a1) are used to form a copolymer, there is no limitation regarding the form of resultant copolymer, and a random copolymer, a block copolymer, a graft copolymer or a combination thereof can be employed.

Among the radical polymerizable monomers (a1) used in the present invention, acrylates, methacrylates, acrylonitrile, methacrylonitrile, vinyl acetate, styrene, α-methylstyrene, acrylamide, methacrylamide, vinyl ether compounds, vinyl chloride, vinylidene chloride, butadiene, isoprene, acrylic acid, and methacrylic acid are preferable in terms of availability and price; acrylates, methacrylates, acrylonitrile, methacrylonitrile, vinyl acetate, styrene, $\alpha$-methylstyrene, acrylamide, and methacrylamide are more preferable in terms of availability and price; acrylates and methacrylates are even more preferable because of the resultant polymers have excellent oil resistance, heat resistance, weatherability and low staining properties; and methacrylates and acrylates that allow the glass transition temperature of the resultant polymer to be 0°C or less are most preferable, because a flexible cured product can be obtained. As the acrylate that allows the glass transition temperature of the resultant polymer to be 0°C or less, n-butyl acrylate and t-butyl acrylate are preferable in terms of availability and price.

[Solvent and polymerization initiator used for a polymerization and method for polymerization]

In all of the production methods 1 to 3 by which the polymer (A) containing a cross-linkable silyl group contained in the composition of the present invention is prepared, a radical polymerization of the radical polymerizable monomer (a1) is performed in the presence of a thiocarbonylthio compound. There is no particular limitation regarding the mode of the radical polymerization. Bulk polymerization, solution polymerization, emulsion polymerization, suspension polymerization, microsuspension polymerization and other methods used commonly in the art can be employed. Among these, aqueous polymerization such as emulsion polymerization, suspension polymerization, and microsuspension polymerization is preferable in terms of cost and safety. However, when a modification reaction after the polymerization is performed in an organic solvent or without a solvent, solution polymerization or bulk polymerization is preferable because the processes can be performed successively.

Examples of a solvent used to perform solution polymerization of the radical polymerizable monomer (a1) include, but are not limited to, hydrocarbon solvents such as heptane, hexane, octane, and mineral spirit; ester solvents such as ethyl acetate, n-butyl acetate, isobutyl acetate, ethylene glycol monomethyl ether acetate, and diethylene glycol monobutyl ether acetate; ketone solvents such as acetone, methyl ethyl ketone, methyl isobutyl ketone, diisobutyl ketone, and cyclohexanone; alcohol solvents such as methanol, ethanol, isopropanol, n-butanol, sec-butanol, and isobutanol; ether solvents such as tetrahydrofuran, diethyl ether, dibutyl ether, dioxane, ethylene glycol dimethyl ether, and ethylene glycol diethyl ether; and aromatic petroleum solvents such as toluene, xylene, benzene, SWAZOL 310 (manufactured by COSMO OIL CO., LTD.), SWAZOL 1000 (manufactured by COSMO OIL CO., LTD.), and SWAZOL 1500 (manufactured by COSMO OIL CO., LTD.). These solvents can be used alone or in combination of two or more. The kind and the amount of the solvent to be used can be determined by considering the solubility of a monomer to be used, the solubility of the polymer to be formed, the concentration of a polymerization initiator or the concentration of a monomer suitable for achieving a sufficient reaction rate, the solubility of a thiocarbonylthio compound, the influence on the human body or environment, the availability, and the price or the like, and there is no particular limitation. Toluene, ethyl acetate, n-butyl acetate, acetone, and dimethylformamide are industrially preferable in terms of availability and price.

When performing emulsion polymerization or microsuspension polymerization of the radical polymerizable monomer (a1), the following emulsifiers can be used, without limitation: anionic surfactants such as fatty acid soaps, rosin soaps, condensation product of sodium naphthalenesulfonate with formalin, sodium alkylbenzene sulfonate, sodium alkylsulfonate (e.g., sodium dodecyl sulfonate), ammonium alkylsulfate, triethanolamine alkylsulfate, sodium dialkyl sulfosuccinate, sodium alkyl diphenyl ether disulfonate, sodium polyoxyethylene alkyl ether sulfate and sodium polyoxyethylene alkyl phenyl ether sulfate; nonionic surfactants such as polyoxyethylene alkyl ether, polyoxyethylene higher alcohol ether, sorbitan fatty acid ester, polyoxyethylene sorbitan fatty acid ester, polyoxyethylene sorbitol fatty acid ester, glycerin fatty acid ester, polyoxyethylene fatty acid ester, polyoxyethylene alkylamine, and alkylalkanolamide; and cationic surfactants such as alkyltrimethylammonium chloride. These emulsifiers can be used alone or in combination of two or more. If necessary, a cationic surfactant such as alkylamine hydrochloride may be used, or a dispersant for suspension polymerization, which is described later, may be added. There is no particular limitation regarding the amount of the emulsifier to be used, but in general, 0.1 to 20 parts by weight per 100 parts by weight of the monomer can be used.

When performing suspension polymerization of the radical polymerizable monomer (a1), any commonly employed dispersants can be used as the dispersant. Examples of the dispersant include, but are not limited to, partially saponified poly(vinyl acetate), poly(vinyl alcohol), methyl cellulose, carboxymethyl cellulose, gelatin, poly(alkylene oxide), and a combination of an anionic surfactant and a dispersing agent. They can be used alone or in combination of two or more. If necessary, emulsifiers for emulsion polymerization as described above can be used in combination. There is no particular limitation regarding the amount of the dispersant to be used, but in general, 0.1 to 20 parts by weight per 100 parts by weight of the monomer can be employed.

There is no particular limitation regarding a polymerization initiator used when performing radical polymerization of the radical polymerizable monomer (a1) or a method for initiating polymerization, and commonly employed polymerization initiators or methods for initiating polymerization can be employed. Examples of polymerization initiators

include, but are not limited to, peroxide polymerization initiators such as methyl ethyl ketone peroxide, methyl isobutyl ketone peroxide, cyclohexanone peroxide, methylcyclohexanone peroxide, isobutyryl peroxide, 3,5,5-trimethylhexanoyl peroxide, lauroyl peroxide, benzoyl peroxide, t-butyl hydroperoxide, cumene hydroperoxide, diisopropyl benzene hydroperoxide, p-menthane hydroperoxide, 1,1,3,3-tetramethylbutyl hydroperoxide, di-t-butyl peroxide, t-butyl-α-cumyl peroxide, di-α-cumyl peroxide, 1,4-bis[(t-butylperoxy)]isopxopyl] benzene, 1,3-bis[(t-butylperoxy)isopropyl] benzene, 2,5-dimethyl-2,5-bis(t-butylperoxy) hexane, 2,5-dimethyl-2,5-bis(t-butylperoxy)-3-hexyne, 1,1-bis(t-butylperoxy)-3,3,5-trimethylcyclohexane, n-butyl-4,4-bis(t-butylperoxy)valerate, 2,2-bis(t-butylperoxy)butane, t-butyl peroxyacetate, t-butyl peroxyisobutyrate, t-butylperoxyoctoate, t-butyl peroxypivalate, t-butyl peroxyneodecanoate, t-butylperoxy-3,5,5-trimethyl hexanoate, t-butyl peroxybenzoate, t-butyl peroxylaurate, 2,5-dimethyl-2,5-bis(benzoyl peroxy)hexane, bis(2-ethylhexyl)peroxydicarbonate, diisopropyl peroxydicarbonate, di-sec-butyl peroxydicarbonate, di-n-propyl peroxydicarbonate, bis(3-methoxybutyl)peroxydicarbonate, bis(2-ethoxyethyl)peroxydicarbonate, bis(4-t-butylcyclohexyl)peroxydicarbonate, O-t-butyl-O-isopropyl peroxycarbonate, and succinic acid peroxide; azo polymerization initiators such as 2,2'-azobis-(2-amidinopropane) dihydrochloride, dimethyl 2,2'-azobisisobutyrate, 2,2'-azobis-(4-methoxy-2,4-dimethylvaleronitrile), 2,2'-azobis(isobutyronitrile), 1,1'-azobis(cyclohexan-1-carbonitrile), azocumene, 2,2'-azobis(2-methylbutyronitrile), 2,2'-azobis-(2,4-dimethylvaleronitrile), 4,4'-azobis(4-cyanovaleric acid), 2-(t-butylazo)-2-cyanopropane, 2,2'-azobis(2,4,4-trimethylpentane), and 2,2'-azobis(2-methylpropane); inorganic peroxides such as potassium persulfate and sodium persulfate; vinyl monomers that thermally produce radicals such as styrene; compounds that generate radicals by light such as benzoin derivatives, benzophenone, acylphosphine oxide, and photoredox compounds; redox polymerization initiators using sodium sulfite, sodium thiosulfate, sodium formaldehyde sulfoxylate, ascorbic acid, ferrous sulfate or the like as a reducing agent and potassium peroxodisulfate, hydrogen peroxide, t-butylhydroperoxide or the like as an oxidizing agent. These polymerization initiators can be used alone or in combination of two or more. Other than the above, polymerization initiating systems by electron beam irradiation, X-ray irradiation, radioactive ray irradiation, or the like also can be employed. As such a method for initiating polymerization, the method described in Moad and Solomon "The Chemistry of Free Radical Polymerization", Pergamon, London, 1995, pages 53-95 can be employed.

There is no particular limitation regarding the amount of the polymerization initiator used in the present invention. In view of obtaining a polymer with narrow molecular weight distribution, the amount of radicals generated during polymerization is preferably one mole or less, and more preferably 0.5 moles or less, with respect to one mole of the thiocarbonylthio group of the thiocarbonylthio compound. Furthermore, in order to control the amount of the radicals generated during polymerization, in addition to the amount of the polymerization initiator to be used, it is preferable to adjust the temperature in the case of using the polymerization initiator for thermal dissociation, and it is preferable to adjust the amount of energy that is irradiated in the case of employing the polymerization initiating systems that generate radicals by light or electron beams or the like. It is preferable to use a polymerization initiator for thermal dissociation and to perform polymerization at a temperature that allows the half-life of the initiator to be 0.5 to 50 hours, because this makes it easy to control the polymerization. The polymerization temperature is more preferably a temperature that allows the half-life to be 1 to 20 hours, and even more preferably a temperature that allows the half-life to be 5 to 15 hours.

[Production of polymer (A) containing a cross-linkable silyl group]

The polymer (A) containing a cross-linkable silyl group can be produced by the production method 1,2 or 3 as described above. These methods will be more specifically described below.

Production method 1: production of polymer (A-1) containing a cross-linkable silyl group

According to the production method 1, as shown in the scheme 1, first, a polymerization of the radical polymerizable monomer (a1) is performed in the presence of the thiocarbonylthio compound. In the production method 1, as the thiocarbonylthio compound, the thiocarbonylthio compound (2) can be used preferably. It is sufficient that the thiocarbonylthio compound is present in the reaction system during polymerization, and there is no limitation regarding the method for adding the thiocarbonylthio compound, but it is preferable to dissolve or disperse the compound in the reaction system before the start of polymerization, because the molecular weight or the molecular weight distribution of a polymer to be produced can be controlled and the introduction amount of the cross-linkable silyl groups can be increased. For example, in the case of solution polymerization, a method of adding the thiocarbonylthio compound by dissolving the same in a solvent or the radical polymerizable monomer (a1) is preferable. In the case of aqueous polymerization such as emulsion polymerization and suspension polymerization, it is preferable to dissolve the compound in a small amount of solvent for addition, to dissolve the compound in the radical polymerizable monomer (a1) for addition, or to preliminarily stir the reaction system containing the compound with a homogenizer or the like for dispersion.

By this polymerization, a polymer (6) having a thiocarbonylthio group is produced. Then, an unsaturated compound (a2) containing a cross-linkable silyl group is copolymerized when the consumed amount of the radical polymerizable monomers (a1) has reached a level of 80% or more.

The unsaturated compound (a2) containing a cross-linkable silyl group is a compound comprising an unsaturated group and a cross-linkable silyl group shown by general formula (1):

$$-[Si(R^1)_{2-b}(Y^1)_bO]_mSi(R^2)_{3-a}(Y^2)_a \quad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$-(wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

There is no particular limitation regarding the unsaturated compound (a2) containing a cross-linkable silyl group, but specific examples thereof include a compound shown by general formula (9):

$$H_2C = C(R^8)\text{-}R^9\text{-}R^{10}\text{-}[Si(R^1)_{2-b}(Y^1)_bO]_m\text{-}Si(R^2)_{3-a}(Y^2)_a \quad (9)$$

wherein $R^1$, $R^2$, $Y^1$, $Y^2$, a, b, and m are the same as those shown in the formula (1); $R^8$ is hydrogen or a methyl group; $R^9$ is -C(O)O- or o-, m-, or p-phenylene group; and $R^{10}$ is a single bond or a bivalent organic group having 1 to 20 carbon atoms, and may have at least one ether linkage.

In the unsaturated compound (a2) containing a cross-linkable silyl group, in the case where $R^9$ is -C(O)O- (ester group), the compound is a (meth)acrylate compound, and in the case where $R^9$ is a phenylene group, the compound is a styrene compound. Examples of $R^{10}$ include an alkylene group such as methylene, ethylene and propylene, an aralkyl group such as o-, m-, and p-phenylene groups and a benzyl group, and an alkylene group having an ether linkage such as $-CH_2CH_2\text{-}O\text{-}CH_2-$, and $-O\text{-}CH_2-$.

$Y^1$ and $Y^2$ are each independently a hydroxyl group or a hydrolyzable group. There is no particular limitation regarding the hydrolyzable group, and any of the hydrolyzable groups described in the section of the structure of the polymer (A) containing a cross-linkable silyl group can be employed preferably. Among these, an alkoxy group is particularly preferable because of its mild hydrolyzability and easy handling. The group $Y^2$ is present in the number of 1 to 3 with respect to a silicon atom in a molecular end, and the group $Y^1$ is present in the number of 1 to 2 with respect to a silicon atom in a non-end portion of the molecule. The total sum of the groups $Y^1$ and $Y^2$ (a + mb) is preferably 1 to 5. When at least one of the groups $Y^1$ and $Y^2$ is present in a number of two or more in the molecule of the compound (9), the groups may be the same or different. Regarding the silicon atoms constituting the cross-linkable silicon compound (a silicon atom to which the group $Y^1$ or $Y^2$ is bonded), it is suitable that one, or two or more silicon atoms are present in the compound shown by formula (9).

Among these, the following compounds are preferable because of their mild reactivity of hydrolysis, easy handling and easy availability: $H_2C = C(H)CO_2\text{-}(CH_2)_{n1}\text{-}Si(OCH_3)_3$, $H_2C = C(H)CO_2\text{-}(CH_2)_{n1}\text{-}Si(CH_3)(OCH_3)_2$, $H_2C = C(H)CO_2\text{-}(CH_2)_{n1}\text{-}Si(OC_2H_5)_3$, $H_2C = C(H)CO_2\text{-}(CH_2)_{n1}\text{-}Si(CH_3)(OC_2H_5)_2$, $H_2C = C(H)CO_2\text{-}(CH_2)_{n1}\text{-}Si(OC_3H_7)_3$, $H_2C = C(H)CO_2\text{-}(CH_2)_{n1}\text{-}Si(CH_3)(OC_3H_7)_2$, $H_2C= C(CH_3)CO_2\text{-}(CH_2)_{n1}\text{-}Si(OCH_3)_3$, $H_2C = C(CH_3)CO_2\text{-}(CH_2)_{n1}\text{-}Si(CH_3)(OCH_3)_2$, $H_2C=C(CH_3)CO_2\text{-}(CH_2)_{n1}\text{-}Si(OC_2H_5)_3$, $H_2C = C(CH_3)CO_2\text{-}(CH_2)_{n1}\text{-}Si(CH_3)(OC_2H_5)_2$, $H_2C = C(CH_3)CO_2\text{-}(CH_2)_{n1}\text{-}Si(OC_3H_7)_3$, $H_2C = C(CH_3)CO_2\text{-}(CH_2)_{n1}\text{-}Si(CH_3)(OC_3H_7)_2$, $H_2C = C(H)CO_2\text{-}(CH_2)_{n2}\text{-}O\text{-}(CH_2)_m\text{-}Si(OCH_3)_3$, $H_2C = C(H)CO_2\text{-}(CH_2)_{n2}\text{-}O\text{-}(CH_2)_m\text{-}Si(CH_3)(OCH_3)_2$, $H_2C = C(H)CO_2\text{-}(CH_2)_{n2}\text{-}O\text{-}(CH_2)_m\text{-}Si(OC_2H_5)_3$, $H_2C = C(H)CO_2\text{-}(CH_2)_{n2}\text{-}O\text{-}(CH_2)_m\text{-}Si(CH_3)(OC_2H_5)_2$, $H_2C = C(H)CO_2\text{-}(CH_2)_{n2}\text{-}O\text{-}(CH_2)_m\text{-}Si(OC_3H_7)_3$, $H_2C = C(H)CO_2\text{-}(CH_2)_{n2}\text{-}O\text{-}(CH_2)_m\text{-}Si(CH_3)(OC_3H_7)_2$, $H_2C = C(CH_3)CO_2\text{-}(CH_2)_{n2}\text{-}O\text{-}(CH_2)_m\text{-}Si(OCH_3)_3$, $H_2C = C(CH_3)CO_2\text{-}(CH_2)_{n2}\text{-}O\text{-}(CH_2)_m\text{-}Si(CH_3)(OCH_3)_2$, $H_2C = C(CH_3)CO_2\text{-}(CH_2)_{n2}\text{-}O\text{-}(CH_2)_m\text{-}Si(OC_2H_5)_3$, $H_2C = C(CH_3)CO_2\text{-}(CH_2)_{n2}\text{-}O\text{-}(CH_2)_m\text{-}Si(CH_3)(OC_2H_5)_2$, $H_2C = C(CH_3)CO_2\text{-}(CH_2)_{n2}\text{-}O\text{-}(CH_2)_m\text{-}Si(OC_3H_7)_3$, $H_2C = C(CH_3)CO_2\text{-}(CH_2)_{n2}\text{-}O\text{-}(CH_2)_m\text{-}Si(CH_3)(OC_3H_7)_2$, o-, m-, or p-$H_2C = CH\text{-}C_6H_4\text{-}(CH_2)_{n1}\text{-}Si(OCH_3)_3$, o-, m-, or p-$H_2C = CH\text{-}C_6H_4\text{-}(CH_2)_{n1}\text{-}Si(CH_3)(OCH_3)_2$, o-, m-, or p-$H_2C = CH\text{-}C_6H_4\text{-}O\text{-}(CH_2)_{n1}\text{-}Si(OCH_3)_3$, o-, m-, or p-$H_2C = CH\text{-}C_6H_4\text{-}O\text{-}(CH_2)_{n1}\text{-}Si(CH_3)(OCH_3)_2$,

(wherein $C_6H_4$ is a phenylene group, n1 is an integer of 2 to 20, n2 is an integer of 1 to 20, and m is an integer of 2 to 20). Among these, a compound having a hydrolyzable silyl group in which an methoxy group or an ethoxy group is contained is more preferable because of its higher cross-linking ability.

The unsaturated compound (a2) containing a cross-linkable silyl group is added when the consumed amount

of the radical polymerizable monomer (a1) has reached a level of 80% or more, as described above. The higher the consumed amount of the radical polymerizable monomer (a1) is, the better it is, and 95% or more is preferable. When the ratio is 80% or less, the cross-linkable silyl groups are located not at the molecular ends, but at random in the main chain, so that the molecular weight of an area located between the cross-linkage points is varied, and therefore the mechanical characteristics of the cured product may be impaired. After the polymerization of the radical polymerizable monomers (a1) is completed and the resultant polymer is isolated, the unsaturated compound (a2) containing a cross-linkable silyl group may be added together with a catalyst to the reaction system containing the above polymer so as to carry out a new reaction.

When the unsaturated compound (a2) containing a cross-linkable silyl group is added in an amount equivalent to the number of all the molecular ends of a polymer to be formed from the radical polymerizable monomer (a1), theoretically, cross-linkable silyl groups are introduced to all the molecular ends. However, in order to ensure introduction of the cross-linkable groups in all the molecular ends, it is preferable to use the unsaturated compound in an excessive amount, more specifically, 1 to 10 times larger than the number of the molecular ends. When an amount more than 10 times is used, cross-linkable groups are introduced to the molecular ends of the polymer at a high density, which is not preferable in terms of the properties of the cured product and the storage stability.

With the above-described reaction, a polymer (A-1) containing a cross-linkable silyl group can be obtained. This polymer has cross-linkable silyl groups derived from the unsaturated compounds (a2) containing a cross-linkable silyl group in the molecular end portions at a high ratio.

Production method 2: production of polymer (A-2) containing a cross-linkable silyl group

According to the production method 2, as shown in the scheme 2, first, a polymerization of the radical polymerizable monomer (a1) is performed in the presence of the thiocarbonylthio compound. Also in the production method 2, the thiocarbonylthio compound (2) can be used preferably, and a reaction is performed in the same manner. With this polymerization, a polymer (6) having a thiocarbonylthio group is produced. Then, a diene compound (a3) is added for reaction when the consumed amount of the radical polymerizable monomers (a1) has reached a level of 80% or more.

The diene compound (a3) is a compound having at least two unsaturated groups in the molecule, and at least one of the unsaturated groups is radically polymerizable. The diene compound used in the present invention may have three or more unsaturated groups. Such an unsaturated group is a group shown, for example, by general formula (5):

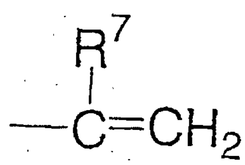

(5)

wherein $R^7$ is a hydrogen atom or a hydrocarbon group having 1 to 20 carbon atoms, and may have an ether linkage or an ester bond.

Examples of such a diene compound (a3) include butadiene, isoprene, chloroprene, 1,4-pentadiene, 1,5-hexadiene, 1,6-heptadiene, 1,7-octadiene, 1,9-decadiene, 1,2-divinylcyclohexane, 1-allyl-4-vinylcyclohexane, 1,4-diallylcyclohexane, 1,4-divinylbenzene, 1,2-divinylbenzene, 4-vinyl-$\alpha$-methylstyrene, 4-allylstyrene, 4-allyl-$\alpha$-methylstyrene, 1,4-diallylbenzene, 1,3,5-trivinylbezene, 1,4-divinylnaphthalene, 9,10-divinylanthracene, divinyl ether, diallyl ether, allyl vinyl ether, divinyl carbonate, diallyl carbonate, bisphenol-A diallyl ether, bisphenol-A trivinyl ether, trimethylolpropane triallyl ether, trimethylolpropane trivinyl ether, trimethylolpropane monovinyl diallyl ether, triallyl isocyanurate, dimethoxy divinylsilane, dimethyl divinylsilane, 1,5-divinyl hexamethylcyclotetrasiloxane, vinyl methacrylate, isopropenyl methacrylate, allyl methacrylate, 4-vinylphenyl methacrylate, bisphenol-A dimethacrylate, dimethacrylate of caprolactone modified neopentylglycol hydroxypivalate ester, ditrimethylolpropane tetramethacrylate, dipentaerythritol hexamethacrylate, dipentaerythritol pentamethacrylate, trimethylolpropane ethoxy trimethacrylate, trimethylolpropane trimethacrylate, trimethylolpropane dimethacrylate, neopentylglycol dimethacrylate, neopentylglycol hydroxypivalate dimethacrylate, 1,9-nonanediol dimethacrylate, 1,4-butanediol dimethacrylate, 1,6-hexanediol dimethacrylate, ethylene glycol dimethacrylate, triethylene glycol dimethacrylate, tetraethylene glycol dimethacrylate, pentaerythritol trimethacrylate, N-vinylaminoethyl methacrylate, N-allylaminoethyl methacrylate, N,N-divinylaminoethyl methacrylate, N,N-diallylaminoethyl methacrylate, vinyl acrylate, isopropenyl acrylate, allyl acrylate, 4-vinylphenyl acrylate, bisphenol-A diacrylate, diacrylate of caprolactone modified neopentylglycol hydroxypivalate ester, ditrimethylolpropane tetraacrylate, dipentaerythritol hexaacrylate, dipentaerythritol pentaacrylate, trimethylolpropane ethoxytriacrylate, trimethylolpropane triacrylate, trimethylolpropane diacrylate, neopentylglycol diacrylate, neopentylglycol hydroxypivalate diacrylate, 1,9-nonanediol diacrylate, 1,4-butanediol diacrylate, 1,6-hexanediol diacrylate, ethylene glycol diacrylate, triethylene glycol diacrylate, tetraethylene glycol diacrylate, pentaerythritol triacrylate, N-vinylaminoethyl acrylate, N-allylaminoethyl acrylate, N,N-divinylaminoethyl acrylate, N,N-diallylaminoethyl acrylate, poly(ethylene oxide) diallyl ether, poly(propylene oxide) diallyl ether, poly(ethylene oxide) divinyl ether, poly(propylene oxide) divinyl ether, poly(ethylene oxide) diisopropenyl ether, poly(propylene oxide) diisopropenyl ether, polycarbonate divinyl ether, polycarbonate diallyl ether, poly (butylene terephthalate) divinyl ether, poly(butylene terephthalate) dially ether, poly(ethylene terephthalate) divinyl ether, and poly(ethylene terephthalate) diallyl ether. These diene compounds (a3) can be used alone or in combination of two or more. Among these compounds, a compound in which a plurality of unsaturated bonds present in a molecule, wherein each of the unsaturated bonds has different radical polymerization reactivity is preferable because cross-linking reaction between the polymers hardly occurs, and a compound having at least two different kinds of unsaturated groups selected from the group consisting of a vinyl group, an isopropenyl group, an allyl group, a methacryloyl group and an acryloyl group is more preferable.

The diene compound (a3) is added when the consumed amount of the radical polymerizable monomer (a1) has reached a level of 80% or more, as described above. The higher the consumed amount of the radical polymerizable monomer (a1) is, the better it is, and 95% or more is preferable. When the ratio is 80% or less, the cross-linkable silyl groups are located not in the molecular ends, but at random in the main chain, so that the molecular weight of an area located between the cross-linkage points is varied, and therefore the mechanical characteristics of the cured product may be impaired. After the polymerization of the radical polymerizable monomers (a1) is completed and the resultant polymer is isolated, the diene compound (a3) may be added together with a catalyst to the reaction system containing the above polymer so as to carry out a new reaction.

The reaction with the diene compound (a3) provides a polymer (a4) having an unsaturated group. In the scheme 2, an unsaturated group is present in the portion shown as (a3) in the polymer (a4). Then, a hydrosilane compound (a5) containing a cross-linkable silyl group is reacted with the polymer (a4) having the unsaturated group.

The hydrosilane compound (a5) containing a cross-linkable silyl group is a compound having a hydrosilyl group and the cross-linkable silyl group shown by general formula (1) in one molecule. There is no particular limitation regarding such a hydrosilane compound having a cross-linkable silyl group, but a typical example thereof is a compound as shown by general formula (10):

$$H\text{-}[Si(R^1)_{2-b}(Y^1)_bO]_m\text{-}Si(R^2)_{3-a}(Y^2)_a \qquad (10)$$

wherein $R^1$, $R^2$, a, b, m, $Y^1$ and $Y^2$ are as defined in the formula (1).

Specific examples of $R^1$, $R^2$, $Y^1$ and $Y^2$ include the same groups as listed in the description of general formula (1).

Among these hydrosilane compounds (a5) containing a cross-linkable silyl group, a compound as shown by general formula (11) is particularly preferable, because of its easy availability:

$$H\text{-}Si(R^2)_{3-a}(Y^2)_a \qquad (11)$$

wherein $R^2$, $Y^2$ and a are as defined as in the formula (1).

Specific examples of the hydrosilane compound containing a cross-linkable silyl group shown by general formula (10) or (11) include the following compounds: $HSiCl_3$, $HSi(CH_3)Cl_2$, $HSi(CH_3)_2Cl$, $HSi(OCH_3)_3$, $HSi(CH_3)(OCH_3)_2$, $HSi(CH_3)_2OCH_3$, $HSi(OC_2H_5)_3$, $HSi(CH_3)(OC_2H_5)_2$, $HSi(CH_3)_2OC_2H_5$, $HSi(OC_3H_7)_3$, $HSi(C_2H_5)(OCH_3)_2$, $HSi(C_2H_5)_2OCH_3$, $HSi(C_6H_5)(OCH_3)_2$, $HSi(C_6H_5)_2(OCH_3)$, $HSi(CH_3)(OC(O)CH_3)_2$, $HSi(CH_3)_2O\text{-}[Si(CH_3)_2O]_2\text{-}Si(CH_3)(OCH_3)_2$, and $HSi(CH_3)[O\text{-}N{=}C(CH_3)_2]_2$,

wherein $C_6H_5$ is a phenyl group.

When reacting the polymer (a4) containing an unsaturated group with the hydrosilane compound (a5) containing a cross-linkable silyl group, a hydrosilylation catalyst that is commonly used in the art can be employed. There is no particular limitation regarding the hydrosilylation catalyst, but a transition metal catalyst is preferable because of its high reactivity. Examples of the transition metal catalyst include platinum, a material in which a platinum solid is dispersed in a carrier made of alumina, silica, carbon black or the like, platinum chloride, a complex of platinum chloride and alcohol, aldehyde, ketone or the like, a complex of platinum and olefin, and a complex of platinum (0) and divinyltetramethyl disiloxane. Examples of catalysts other than platinum compounds include $RhCl(PPh_3)_3$, $RhCl_3$, $RuCl_3$, $IrCl_3$, $FeCl_3$, $AlCl_3$, $PdCl_2 \cdot H_2O$, $NiCl_2$, and $TiCl_4$.

According to the above-described reaction, the hydrosilane compound (a5) containing a cross-linkable silyl

group is bonded to the unsaturated group in the portion (a3) in the polymer (a4), so that a polymer (A-2) containing a cross-linkable silyl group can be obtained.

Production method 3: production of polymer (A-3) containing a cross-linkable silyl group

The preparation step of the polymer (A) containing a cross-linkable silyl group according to the production method 3 is shown in the schemes 3 and 4.

In the scheme 3, first, a polymerization of the radical polymerizable monomer (a1) is performed in the presence of the thiocarbonylthio compound (2). This polymerization is performed in the same manner as in Production methods 1 and 2, but the reaction is allowed to proceed sufficiently to obtain the polymer (6) having a thiocarbonylthio group. Then, the thiocarbonylthio group of the polymer (6) having a thiocarbonylthio group is converted into a mercapto group or a mercaptide group by a treatment agent to obtain a polymer (7) having a mercapto group or a mercaptide group.

There is no particular limitation regarding the treatment agent, but it is preferable to use a compound selected from the group of a base, an acid, and a compound containing a hydrogen-nitrogen bond, because of the high yield. Among these, when a base or an acid is used, the thiocarbonylthio group is converted to a mercapto group by a hydrolysis reaction in the presence of water. When the thiocarbonylthio group is treated using a specific base under non-aqueous conditions, it is converted to a mercaptide group. Among the above treatment agents, it is preferable to use a compound containing a hydrogen-nitrogen bond, because the presence of water is not necessary.

There is no particular limitation regarding the base, and for example, the following compounds can be used: alkali metal hydroxides such as sodium hydroxide, potassium hydroxide, and lithium hydroxide; alkaline earth metal hydroxides such as calcium hydroxide, magnesium hydroxide, barium hydroxide, and cesium hydroxide; transition metal hydroxides such as aluminium hydroxide, and zinc hydroxide; alkali metal alcoholates such as sodium methylate, sodium ethylate, sodium phenylate, lithium ethylate, and lithium butyrate; alkaline earth metal alcoholates such as magnesium methylate, and magnesium ethylate; metal hydrides such as sodium hydride, lithium hydride, calcium hydride, lithium aluminium hydride, and sodium borohydride; organometallic reagents such as hydrosulfite, n-butyl lithium, t butyl lithium, ethyl magnesium bromide, and phenyl magnesium bromide. Furthermore, alkali metals such as lithium, sodium, and potassium; and alkaline earth metals such as magnesium, and calcium can be used. They can be used alone or in combination of two or more. Among these, sodium hydroxide, potassium hydroxide, lithium hydroxide, calcium hydroxide, magnesium hydroxide, sodium methylate, sodium ethylate, sodium hydride, lithium hydride, metallic lithium, metallic sodium, and metallic potassium are preferable in terms of availability, price and reactivity, and sodium hydroxide, potassium hydroxide, lithium hydroxide, calcium hydroxide, magnesium hydroxide, sodium methylate and sodium ethylate are more preferable, because of easy handling.

There is no particular limitation regarding the acid, and for example, the following compounds can be used: inorganic acids such as hydrochloric acid, nitric acid, sulfuric acid, phosphoric acid, hydrofluoric acid, hydrobromic acid, fluoroboric acid, chlorosulfonic acid, hydroiodic acid, arsenic acid, and silicofluoric acid; organic acids such as p-toluenesulfonic acid, trifluoromethylsulfonic acid, acetic acid, trifluoroacetic acid, methyl phosphate, ethyl phosphate, n-propyl phosphate, isopropyl phosphate, n-butyl phosphate, lauryl phosphate, stearyl phosphate, 2-ethylhexyl phosphate, isodecyl phosphate, dimethyl dithiophosphate, diethyl dithiophosphate, diisopropyl dithiophosphate, and phenylphosphonic acid; and acidic cation exchange resin such as strong acidic cation exchange resin and weak acidic cation exchange resin. Furthermore, compounds that exhibit acidity by reacting with a trace amount of water can be used. Examples of such compounds include acid anhydrides such as acetic anhydride, propionic anhydride, trifluoroacetic anhydride, phthalic anhydride, and succinic anhydride; acyl halides; and metal halides such as titanium tetrachloride, aluminum chloride, and silicon chloride. They can be used alone or in combination of two or more. Among these, hydrochloric acid, nitric acid, sulfuric acid, phosphoric acid, aluminum chloride, titanium tetrachloride, chlorosulfonic acid, p-toluenesulfonic acid, trifluoromethylsulfonic acid, acetic acid, and trifluoroacetic acid are preferable.

There is no particular limitation regarding the compounds containing a hydrogen-nitrogen bond, and for example, ammonia, hydrazine, primary amines, secondary amines, amides, amine hydrochlorides, polymers containing a hydrogen-nitrogen bond, and hindered amine light stabilizers (HALS) can be used.

Among the compounds containing a hydrogen-nitrogen bond, specific examples of primary amines include, but are not limited to, N-(2-aminoethyl)ethanolamine, 3-amino-1-propanol allylamine, isopropylamine, 3,3'-iminobis (propylamine), monoethylamine, 2-ethylhexylamine, 3-(2-ethylhexyloxy)propylamine, 3-ethoxypropylamine, 3-(diethylamino)propylamine, 3-(dibutylamino)propylamine, n-butylamine, t-butylamine, sec-butylamine, n-propylamine, 3-(methylamino)propylamine, 3-(dimethylamino)propylamine, N-methyl-3,3'-iminobis(propylamine), 3-methoxypropylamine, 2-aminoethanol, ethylenediamine, diethylenetriamine, triethylenetetramine, tetraethylenepentamine, pentaethylenehexamine, N-carboxy-4,4'-methylenebiscyclohexylamine, 1,4-diaminobutane, 1,2-diaminopropane, 1,3-diaminopropane, diaminomaleonitrile, cyclohexylamine, ATU (manufactured by AJINOMOTO CO., INC.), thioureadioxide, 2-hydroxyethylaminopropylamine, hexamethylenediamine, n-hexylamine, monomethylamine, monomethylhydrazine, 3-(lauryloxy)propylamine, anisidine, aniline, p-aminoacetanilide, p-aminobenzoic acid, ethyl p-aminobenzoate,

2-amino-4-chlorophenol, 2-aminothiazole, 2-aminothiophenol, 2-amino-5-nitrobenzonitrile, aminophenol, p-aminobenzaldehyde, 4-aminobenzonitrile, anthranilic acid, 3-isopropoxyaniline, 4-amino-5-hydroxy-2,7-naphthalenesulfonic acid monosodium salt, 6-amino-4-hydroxy-2-naphthalenesulfonic acid, xylidine, m-xylylenediamine, p-cresidine, dianisidine, 2-amino-5-naphthol-7-sulfonic acid, 1,4-diaminoanthraquinone, 4,4'-diamino-3,3'-diethyldiphenylmethane, 4,4'-diaminobenzanilide, diaminodiphenyl ether, 3,3'-dimethyl-4,4'-diaminodiphenylmethane, stefanyl acid, 2,4,5-trichloroaniline, o-tolidine, toluidine, toluylenediamine, nitroaniline, m-nitro-p-toluidine, phenylhydrazine, phenylenediamine, phenetidine, phenethylamine, benzylamine, benzophenone hydrazone, mesidine, 2-methyl-4-nitroaniline, paramine, aminopyridine, 1-(2-aminoethyl)piperazine, N-(3-aminopropyl)morpholine, 1-amino-4-methylpiperazine, bis(aminopropyl)piperazine, benzoguanamine, melamine, o-chloroaniline, 2,5-dichloroaniline, 3,4-dichloroaniline, 3,5-dichloroaniline, 2-amino-4-chlorobenzoic acid, o-chloro-p-nitroaniline, 5-chloro-2-nitroaniline, 2,6-dichloro-4-nitroaniline, 2-(2-chlorophenyl)ethylamine, 3,3'-dichloro-4,4'-diaminodiphenylmethane, 3,3'-dichloro-4,4'-diaminobiphenyl, 2,4-difluoroaniline, o-fluoroaniline, N-β-(aminoethyl)-γ-aminopropyltrimethoxysilane, N-β-(aminoethyl)-γ-aminopropylmethyldimethoxysilane, and γ-aminopropyltriethoxysilane.

Among the compounds containing a hydrogen-nitrogen bond, specific examples of secondary amines include, but are not limited to, N-methylethanolamine, diallylamine, diisopropylamine, diethylamine, diisobutylamine, di-2-ethylhexylamine, iminodiacetic acid, 3,3'-iminodipropionitrile, bis(hydroxyethyl)amine, N-ethylethylenediamine, ethyleneimine, dicyclohexylamine, 1,1-dimethylhydrazine, di-n-butylamine, di-t-butylamine, dimethylamine, N-ethylaniline, diphenylamine, dibenzylamine, N-methylaniline, 2-methyl-4-methoxydiphenylamine, imidazole, 2-methylimidazole, 2-ethyl-4-methylimidazole, 2-phenylimidazole, 2-undecylimidazole, 1,3-di(4-piperidyl)propane, 2,5-dimethylpiperazine, 2,6-dimethylpiperazine, 3,5-dimethylpyrazole, 5,5'-bi-1H-tetrazole, 5-phenyl-1H-tetrazole, 5-methyl-1H-tetrazole, (hydroxyethyl)piperazine, pipecoline, 2-(1-piperazinyl)pyrimidine, piperazine, piperidine, pyrrolidine, 2-methylpiperazine, and morpholine.

Among the compounds containing a hydrogen-nitrogen bond, specific examples of amide compounds include, but are not limited to, dihydrazide adipate, N-isopropylacrylamide, N-t-octylacrylamide, carbohydrazide, glycylglycine, N-[3-(dimethylamino)propyl]acrylamide, N-[3-(dimethylamino) propyl]methacrylamide, N,N'-ethylenebis(stearoamide), oleic amide, stearic acid amide, N-(hydroxymethyl)stearamide, diacetone acrylamide, thioacetamide, thiocarbohydrazide, thiosemicarbazide, thiourea, dodecanedioic acid dihydrazide, adipic acid dihydrazide, isophthalic acid dihydrazide, 1,6-hexamethylene bis(N,N-dimethylsemicarbazide), formamide, methacrylamide, N,N'-methylene bis(acrylamide), N-methylolacrylamide, acetanilide, acetoacetic-o-anisidide, acetoacetanilide, acetoacetic-m-xylidide, acetoacetic toluidide, 1,1,1',1'-tetramethyl-4,4'-(methylene-cli-p-phenylene)disemicarbazide, toluenesulfonamide, phthalimide, isocyanuric acid, 3-carbamoyl-2-pyrazinecarboxylic acid, succinimide, 5,5-dimethylhydantoin, 1,3-bis(hydrazinocarboethyl)-5-isopropylhydantoin, hydantoin, phenylpyrazolidone, 3-methyl-5-pyrazolone, 1-methylol-5,5-dimethylhydantoin, 3-(4-chlorophenyl)-1,1-dimethylurea, bromovalerylurea, 2,6-difluorobenzamide, and 2,2,2-trifluoroacetamide.

Among the compounds containing a hydrogen-nitrogen bond, specific examples of amine hydrochloride compounds include, but are not limited to, acetamidine hydrochloride, 2,2'-azobis(2-amidinopropane) dihydrochloride, monomethylamine hydrochloride, dimethylamine hydrochloride, monoethylamine hydrochloride, diethylamine hydrochloride, monopropylamine hydrochloride, dipropylamine hydrochloride, monobutylamine hydrochloride, dibutylamine hydrochloride, semicarbazide hydrochloride, guanidine hydrochloride, aminoguanidine hydrochloride, 2-chloroethylamine hydrochloride, and t-butylhydrazine monohydrochloride.

Among the compounds containing a hydrogen-nitrogen bond, specific examples of polymers containing a hydrogen-nitrogen bond include, but are not limited to, Polyment (manufactured by NIPPON SHOKUBAI CO., LTD.), polyethyleneimine, aminopolyacrylamide, Nylon 6, Nylon 66, Nylon 610, Nylon 612, Nylon 11, Nylon 12, Nylon MXD 6, Nylon 46, polyamide imide, polyallylamine, and polyurethane.

Among the compounds containing a hydrogen-nitrogen bond, examples of HALS include, but are not limited to, Adekastab LA-77 (manufactured by ASAHI DENKA KOGYO K.K.), Chimassorb 944LD (manufactured by Ciba Specialty Chemicals K.K.), Tinuvin 144 (manufactured by Ciba Specialty Chemicals K.K.), Adekastab LA-57 (manufactured by ASAHI DENKA KOGYO K.K.), Adekastab LA-67 (manufactured by ASAHI DENKA KOGYO K.K.), Adekastab LA-68 (manufactured by ASAHI DENKA KOGYO K.K.), Adekastab LA-87 (manufactured by ASAHI DENKA KOGYO K.K.), and Goodrite UV-3034 (manufactured by BF Goodrich)

Among the above-described treatment agents, it is preferable to use ammonia, a primary amine having a boiling point of 100°C or less such as methyl amine and ethyl amine; a secondary amine having a boiling point of 100°C or less such as dimethyl amine and diethyl amine; and HALS, because the purification process can be simplified when converting the thiocarbonylthio group in the polymer to a mercapto group or a mercaptide group. When ammonia or an amine having a boiling point of 100°C or less is used, excessive amines can be easily removed by distillation under reduced pressure. When HALS is used, excessive HALS serves as a stabilizer, so that it is not necessary to remove it, and the weatherability and the light resistance of the obtained polymer are improved. However, it is not preferable that a large amount of the amines remain in the polymer, because this reduces the heat resistance of the

cured composition. Therefore, ammonia, primary amine having a boiling point of 100°C or less, and secondary amine having a boiling point of 100°C or less are most preferable, because they can be easily removed from the polymer.

When a base or an acid is used as the treatment agent, there is no particular limitation regarding the amount to be used, but it is preferable to use an amount of 0.01 to 100 parts by weight, more preferably 0.05 to 50 parts by weight, and particularly preferably 0.1 to 30 parts by weight, with respect to 100 parts by weight of the polymer (6) having a thiocarbonylthio group, in terms of easy handling and reactivity. When a compound containing a hydrogen-nitrogen bond is used as the treatment agent, there is no particular limitation regarding the amount to be used, but it is preferable to use the compound containing a hydrogen-nitrogen bond in an amount of 0.5 to 1000 moles, and more preferably 1 to 500 moles, with respect to 1 mole of a thiocarbonylthio group, because the introduction ratio of the mercapto group or the mercaptide group is high.

In the present invention, there is no particular limitation regarding the reaction conditions when the polymer is treated with the above-described treatment agents. For example, it is possible to dissolve the polymer having a thiocarbonylthio group in an organic solvent and add a treatment agent as described above thereto. Also, the treatment agent as described above can be added to an aqueous dispersion or emulsion of the polymer. Furthermore, the treatment agent can be added directly to the polymer in a solid or melted state. There is no particular limitation regarding the treatment temperature, but -50 to 300°C is preferable, and -10 to 200°C is more preferable in terms of reactivity.

By the reaction with a treatment agent as described above, a polymer having a mercapto group or a mercaptide group can be obtained. Then, this polymer is reacted with an unsaturated compound (a6) containing a functional group.

The unsaturated compound (a6) containing a functional group is a compound having an unsaturated group and a functional group that can form a bond by a reaction with mercapto groups or mercaptide groups. There is no particular limitation regarding such a compound, as long as it has a compound having the above-described groups. Examples of functional groups that can form a bond by a reaction with a mercapto group or a mercaptide group include but are not limited to: a hydroxyl group, a carboxyl group, an alkoxycarbonyl group (ester bond), an amide group, an epoxy group, a glycidyl group, a mercapto group, a thionester bond, a thiolester bond, a dithioester bond, an isocyanato group, an isothiocyanato group, a carbonyl group, an aldehyde group, an aryloxy group, a quaternary ammonium ion, a sulfone bond, a halogen atom, a carbon-carbon double bond, and a carbon-carbon triple bond.

Examples of a compound having a hydroxyl group and an unsaturated group, which is one type of the unsaturated compound containing a functional group include, but are not limited to, allyl alcohol, 2-vinylphenol, 4-vinylphenol, 4-buten-1-ol, 3-methyl-1-butyn-3-ol, 3-methyl-1-pentyn-3-ol, 3,6-dimethyl-4-octyne-3,6-diol, 2,4,7,9-tetramethyl-5-decyne-4,7-diol, 3,5-dimethyl-1-hexyn-3-ol, 2,5-dimethyl-3-hexyne-2,5-diol, 2,5-dimethyl-2,5-hexanediol, N,N-diallylamino alcohol, N,N-diallylethanolamine, N-allylethanolamine, 2-allyl-1-hexanol, ethylene glycol monoallyl ether, trimethylolpropane diallyl ether, trimethylolpropane monoallyl ether, pentaerythritol monoallyl ether, pentaerythritol diallyl ether, pentaerythritol allyl ether, polyethylene glycol monoallyl ether, polytetramethylene ether glycol monoallyl ether, polypropylene glycol monoallyl ether, 2-allylcyclohexanol, 3-allylcyclohexanol, 4-allylcyclohexanol, 2-allylphenol, 3-allylphenol, 4-allylphenol, 1,4-dihydroxy-5-allylnaphthalene, bisphenol A monoallyl ether, 1-allyl-2-naphthol, 4-allyl-1-naphthol, 4-allylcatechol, spiroglycol monoallyl ether, tris(2-hydroxyethyl)isocyanurate diallyl ether, furfuryl alcohol, and 4-allylfurfuryl alcohol.

Examples of a compound having a carboxyl group and an unsaturated group, which is one type of the unsaturated compound (a6) containing a functional group include, but are not limited to, acrylic acid, methacrylic acid, itaconic acid, undecylenic acid, monoallyl malonate, 2-allylbenzoic acid, 3-allylbenzoic acid, 4-allylbenzoic acid, 3-allylanthranilic acid, 4-allylanthranilic acid, 5-allylanthranilic acid, 5-allylisophthalic acid, 4-allylsalicylic acid, 2-allylterephthalic acid, 2-allylthiobenzoic acid, 3-allylthiobenzoic acid, 4-allylthiobenzoic acid, monoallyl trimellitate, diallyl trimellitate, 2-allyl-1-naphtalenecarboxylic acid, 1-allyl-2-naphtalenecarboxylic acid, 6-hydroxy-1-allyl-2-naphthoic acid, vinylacetic acid, 2-allylphenoxyacetic acid, 3-allylphenoxyacetic acid, 4-allylphenoxyacetic acid, 2-allyl-4-pyridinecarboxylic acid, 4-allylquinoline-2-carboxylic acid, and 2-allylnicotinic acid.

Examples of a compound having an alkoxycarbonyl group and an unsaturated group, which is one type of the unsaturated compound (a6) containing a functional group include, but are not limited to, methyl acrylate, ethyl acrylate, n-propyl acrylate, isopropyl acrylate, n-butyl acrylate, hexyl acrylate, 2-ethylhexyl acrylate, cyclohexyl acrylate, octyl acrylate, decyl acrylate, phenyl acrylate, toluyl acrylate, benzyl acrylate, isobornyl acrylate, 2-methoxyethyl acrylate, 3-methoxybutyl acrylate, 2-hydroxyethyl acrylate, 2-hydroxypropyl acrylate, stearyl acrylate, glycidyl acrylate, 2-acryloyloxypropyl dimethoxymethylsilane, 2-acryloyloxypropyl trimethoxysilane, trifluoromethyl acrylate, pentafluoroethyl acrylate, 2,2,2-trifluoroethyl acrylate, 3-dimethylaminoethyl acrylate, isobutyl acrylate, 4-hydroxybutyl acrylate, t-butyl acrylate, lauryl acrylate, alkyloyl modified dipentaerythritol acrylate, ethylene oxide modified bisphenol A diacrylate, carbitol acrylate, ε -caprolactone modified dipentaerythritol acrylate, caprolactone modified tetrahydrofurfuryl acrylate, diacrylate of caprolactone modified neopentylglycol hydroxypivalate ester, ditrimethylolpropane tetraacrylate, dipentaerythritol hexaacrylate, dipentaerythritol pentaacrylate, tetraethylene glycol acrylate, tetrahydrofurfuryl acrylate, tripropylene glycol acrylate, trimethylolpropane ethoxytriacrylate, trimethylolpropane triacrylate, neopentylglycol diacrylate, neopentylglycol hydroxypivalate diacrylate, 1,9-nonanediol acrylate, 1,4-butanediol acrylate, 2-propenoic acid[2-[1,1-dimethyl-2-[(1-oxo-2-propenyl)oxy]ethyl]-5-ethyl-1,3-dioxan-5-yl]methyl ester, 1,6-hexanediol acrylate, pentaerythritol triacrylate, 2-acryloyloxypropyl hydrogen phthalete, methyl 3-methoxyacrylate, allyl acrylate, methyl methacrylate, ethyl methacrylate, n-butyl methacrylate, isobutyl methacrylate, t-butyl methacrylate, 2-ethylhexyl methacrylate, lauryl methacrylate, tridecyl methacrylate, stearyl methacrylate, cyclohexyl methacrylate, benzyl methacrylate, 2-hydroxyethyl methacrylate, 2-hydroxypropyl methacrylate, N,N-dimethylaminoethyl methacrylate, N,N-diethylaminoethyl methacrylate, glycidyl methacrylate, tetrahydrofurfuryl methacrylate, ethylene glycol dimethacrylate, triethylene glycol dimethacrylate, tetraethylene glycol dimethacrylate, 1,3-butyleneglycol dimethacrylate, trimethylolpropane trimethacrylate, isopropyl methacrylate, pentyl methacrylate, hexyl methacrylate, heptyl methacrylate, octyl methacrylate, 2-ethylhexyl methacrylate, nonyl methacrylate, decyl methacrylate, phenyl methacrylate, toluyl methacrylate, isobornyl methacrylate, 2-methoxyethyl methacrylate, 3-methoxybutyl methacrylate, 2-aminoethyl methacrylate, triethyleneglycol methacrylate, 2-methacryloyloxypropyl trimethoxysilane, 2-methacryloyloxypropyl dimethoxymethylsilane, trifluoromethyl methacrylate, pentafluoroethyl methacrylate, 2,2,2-trifluoroethyl methacrylate, ethylene glycol monoallyl ether acetate, diallyl carbonate, 2-(trimethylammonio)ethyl methacrylate chloride, propylene glycol monoallyl ether acetate, ally vinylacetate, methyl vinylacetate, and itaconic anhydride.

Examples of a compound having an amide group and an unsaturated group, which is one type of the unsaturated compound (a6) containing a functional group include, but are not limited to, acrylamide, methacrylamide, N-methylacrylamide, N-methylmethacrylamide, N,N-dimethylacrylamide, N,N-dimethylmethacrylamide, N-t-butylacrylamide, N-t-butylmethacrylamide, N-n-butylacrylamide, N-n-butylmethacrylamide, N-methylolacrylamide, N-methylolmethacrylamide, N-ethylolacrylamide, N-ethylolmethacrylamide, N-isopropylacrylamide, and triacrylformal.

Examples of a compound having an epoxy group and an unsaturated group include, but are not limited to 3-allyl-1,2-epoxycyclohexane.

Examples of a compound having a glycidyl group and an unsaturated group include, but are not limited to, allylglycidyl ether and vinylglycidyl ether.

Examples of a compound having a mercapto group and an unsaturated group include, but are not limited to, allylmercaptan, 4-butenethiol, 4-mercaptostyrene, 2-allylthiophenol, 3-allylthiophenol, 4-allylthiophenol, 3-allylthiosalicylic acid, 4-allylthiosalicylic acid, 5-allylthiosalicylic acid, furfurylmercaptan, and 4-allylfurfurylmercaptan.

Examples of a compound having a thionester bond and an unsaturated group include, but are not limited to, methyl thioacrylate, methyl thiomethacrylate, n-butyl thioacrylate, n-butyl thiomethacrylate, and allylthiobenzoate.

Examples of a compound having a thiolester bond and an unsaturated group include, but are not limited to, methyl 2-allylthiobenzoate, ethyl 3-allylthiobenzoate, allyl 4-allylthiobenzoate.

Examples of a compound having a dithioester bond and an unsaturated group include, but are not limited to, 4-allyldithiobenzoic acid, methyl 4-allyldithiobenzoate, ethyl 4-allyldithiobenzoate, 2,4-diallylimidazole-5-dithiocarboxylic acid, and methyl 2,4-diallylimidazole-5-dithiocarboxylate.

Examples of a compound having an isocyanato group and an unsaturated group include, but are not limited to, 3-butenyl isocyanate, 5-hexenyl isocyanate, and 4-allyphenyl isocyanate.

Examples of a compound having an isothiocyanato group and an unsaturated group include, but are not limited to, 3-butenyl isothiocyanate, and 5-hexenyl isothiocyanate.

Examples of a compound having a carbonyl group and an unsaturated group include, but are not limited to, allyl acetoacetate, methyl allyl ketone, ethyl allyl ketone, diallyl ketone, 2-allylcyclohexanone, 3-allylcyclohexanone, 4-allylcyclohexanone, 5-allyl-5-methylhydantoin, and N-allyl-2-pyrrolidone.

Examples of a compound having an aldehyde group and an unsaturated group include, but are not limited to, acrolein, methacrolein, allylglyoxal, 2-allylbenzaldehyde, 3-allylbenzaldehyde, 4-allylbenzaldehyde, 5-allyl-3-aldehydopyridine, 2-allyl-4-formylimidazole, 2,4-diallyl-5-formylimidazole, furfural, and 4-allyl furfural.

Examples of a compound having an aryloxy group and an unsaturated group include, but are not limited to, allyl phenyl ether.

Examples of a compound having a quaternary ammonium ion and an unsaturated group include, but are not limited to, diallyl dimethyl ammonium chloride.

Examples of a compound having a sulfone bond and an unsaturated group include, but are not limited to, allyl allylsulfonate.

Examples of a compound having a halogen atom and an unsaturated group include, but are not limited to, allyl chloride, allyl bromide, allyl chlorocarbonate, diallyl chlorendate, chloroprene, methallyl chloride, vinyl chloride, 1-allyl-2-chlorobenzene, 1-allyl-3-chlorobenzene, 1-allyl-4-chlorobenzene, 2-bromo-3-butene, and 1-bromo-3-butene.

Examples of a compound having a carbon-carbon double bond and an unsaturated group include, but are not limited to, 1,6-hexanediol diallyl ether, isoprene, divinylbenzene, 4-vinyl-$\alpha$-methylstyrene, diallyl terephthalate, diallyl phthalate, diallyl isophthalate, triallyl isocyanurate, triallyl cyanurate, and trimethallyl isocyanurate.

Examples of a compound having a carbon-carbon triple bond and an unsaturated group include, but are not limited to, 3-buten-1-yne, 3-methyl-3-buten-1-yne, and 5-hexen-1-yne.

Among these unsaturated compounds (a6) containing a functional group, compounds that contain neither

nitrogen atoms nor sulfur atoms are preferable. This is because a hydrosilylation between the polymer (a7) having an unsaturated group formed by a reaction and a hydrosilane compound (a5) containing a cross-linkable silyl group, which will be described later, proceeds smoothly.

In the reaction between the polymer (7) having a mercapto group (or mercaptide group) and the unsaturated compound (a6) containing a functional group, any suitable catalyst and reaction conditions can be employed, depending on the functional group. For such a reaction utilizing a mercapto group or a mercaptide group, for example, a method described in "COMPREHENSIVE ORGANIC CHEMISTRY; The synthesis and Reactions of Organic Compounds: Volume 3 Sulphur, Selenium, Silicon, Boron, Organometallic Compounds," D.NEVILLE JONES Ed., 1979, PERGAMON PRESS and methods described in documents disclosed therein can be employed.

Specific examples of a reaction between the polymer (7) having a mercapto group (or a mercaptide group) at its molecular end and the unsaturated compound (a6) containing a functional group include, but are not limited to [i] a method of reacting a polymer having a mercapto group and allylmercaptan in the presence of an oxidizing agent such as oxygen or lead oxide so as to synthesize a polymer having an allyl group at its molecular end via a disulfide bond; [ii] a method of reacting a polymer having a mercaptide group and allylchloride by the Williamson method so as to synthesize a polymer having an allyl group at its molecular end; [iii] a method of reacting a polymer having a mercapto group and allylisocyanate in the absence of a catalyst or in the presence of an urethane catalyst such as an organic tin compound so as to synthesize a polymer having an allyl group at its molecular end via an urethane bond; [iv] a method of adding a polymer having a mercapto group to N-allylmaleimide so as to synthesize a polymer having an allyl group at its molecular end; [v] a method of adding a polymer having a mercapto group to butadiene or isoprene so as to synthesize a polymer having an allyl group or a methallyl group at its molecular end; [vi] a method of performing an esterification of a polymer having a mercapto group or a mercaptide group with acrylic acid or methacrylic acid so as to synthesize a polymer having an acryloyl group or a methacryloyl group at its molecular end; [vii] a method of performing transesterification of a polymer having a mercapto group or a mercaptide group with acrylic ester or methacrylic ester so as to synthesize a polymer having an acryloyl group or a methacryloyl group at its molecular end; [viii] a method of reacting a polymer having a mercapto group and allyl ethyl ketone under acidic conditions so as to synthesize a polymer having an allyl group at its molecular end via a thioketal bond; [ix] a method of synthesizing a polymer having an allyl group at its molecular end by dehydration of a polymer having a mercapto group and allyl alcohol; [x] a method of performing an esterification of a polymer having a mercapto group and vinyl acetate so as to synthesize a polymer having a vinyl group at its molecular end; [xi] a method of performing transesterification of a polymer having a mercapto group or a mercaptide group with diallyl carbonate so as to synthesize a polymer having an allyl group at its molecular end via a carbonate bond; and [xii] a method of performing dicarboxylation of a polymer having an allyl group at its molecular end via a carbonate bond obtained in the method [xi] in the presence of a palladium catalyst or a base so as to synthesize a polymer having an allyl group at its end.

Thus, a polymer (a7; shown as a7-1 in the scheme 3) having an unsaturated group at its molecular end is formed by a reaction of a polymer having a mercapto group and an unsaturated compound (a6) containing a functional group. Then, the polymer (a7) having an unsaturated group at its molecular end is reacted with the hydrosilane compound (a5) containing a cross-linkable silyl group. As the hydrosilane compound (a5) containing a cross-linkable silyl group, any compound having a hydrosilyl group and a cross-linkable silyl group that is the same as used in Production method 2 can be employed, and transition metal catalysts as used in Production method 2 can be employed as a hydrosilylation catalyst. At the time of the reaction, a dehydrating agent (e.g., methyl orthoformate) for removing water in the reaction system can be preferably used, if necessary. By the above-described reaction, a polymer (A-3-1) containing a cross-linkable silyl group, which is a polymer containing a cross-linkable silyl group at its molecular end can be obtained. This polymer can be a linear polymer having a cross-linkable silyl group(s) in its one end or both ends, or a star-shaped polymer having a cross-linkable silyl group at its end, depending on the structure of the thiocarbonylthio compound (2).

In the scheme 4, first, a polymerization of the radical polymerizable monomer (a1) is performed in the presence of the thiocarbonylthio compound (3). This polymerization is performed in the same manner as in the scheme 3, and thus the polymer (6) having a thiocarbonylthio group can be obtained Then, the thiocarboxylthio group of the obtained polymer (6) having a thiocarbonylthio group is converted to a mercapto group or a mercaptide group with a treatment agent, and thus a polymer (8) having a mercapto group or a mercaptide group is obtained. Then, this polymer (8) is reacted with the unsaturated compound (a6) containing a functional group and the hydrosilane compound (a5) containing a cross-linkable silyl group in this order. By the above-described reaction, a polymer (A-3-2) containing a cross-linkable silyl group, which is a polymer containing a cross-linkable silyl group at its molecular end, is obtained. As shown in the scheme 4, when the thiocarbonylthio compound (3) is used, a linear polymer having a cross-linkable silyl group in one end is formed.

[polymer (A) containing a cross-linkable silyl group]

By the methods described in Production methods 1 to 3, the polymer (A) containing a cross-linkable silyl group can be obtained. As can be seen from the above description, this polymer (A) has a cross-linkable silyl group shown by general formula (1) at its molecular end.

There is no particular limitation regarding the molecular weight distribution, that is, the ratio of the weight average molecular weight and the number average molecular weight obtained by gel permeation chromatography of the polymer (A) containing a cross-linkable silyl group, but it is preferable that the molecular weight distribution is narrow so that the viscosity of a curable composition that contains this polymer can be suppressed to a low level for easy handling, and the resultant cured product has good mechanical properties. The molecular weight distribution is typically less than 1.8, preferably 1.7 or less, more preferably 1.6 or less, and even more preferably 1.5 or less. The GPC measurement in the present invention is generally performed with a polystyrene gel column using chloroform as an eluent, and the number average molecular weight or the like can be obtained based on polystyrene standards.

There is no particular limitation regarding the number average molecular weight of the polymer (A) containing a cross-linkable silyl group, but a range from 500 to 500000 is preferable, and 1000 to 100000 is more preferable. As the polymer (A) containing a cross-linkable silyl group, it is preferable to use a telechelic polymer having unsaturated groups at both molecular ends, because of good properties when it is contained in a curable composition and cured.

The curable composition of the present invention including the polymer (A) containing a cross-linkable silyl group can be utilized for various applications, as described later. Among these, when the curable composition is used as a sealing agent, an adhesive, a pressure sensitive adhesive or other applications that require the cured product to have rubber-like properties, the polymer (A) containing a cross-linkable silyl group having a glass transition temperature of 0°C or less is preferable. Examples of these polymers include a n-butyl acrylate homopolymer and a copolymer that is obtained from a copolymerization using n-butyl acrylate as the radical polymerizable monomer (a1) and that has the n-butyl acrylate as the main component unit. Among these, a polymer having cross-linkable silyl groups at both ends is more preferable because the cured product has high strength.

When the curable composition is a reactive hot melt adhesive, a reactive thermoplastic elastomer or the like, as the polymer (A) containing a cross-linkable silyl group, for example, polymers in which a cross-linkable silyl group is introduced into a thermoplastic elastomer known in the art that has hard segment(s) and soft segment(s) such as a methyl methacrylate - n-butyl acrylate - methyl methacrylate triblock copolymer, a styrene - butadiene - styrene triblock copolymer, a methyl methacrylate - n-butyl acrylate diblock copolymer, a styrene - butadiene diblock copolymer, and a vinyl chloride - acrylonitrile multiblock copolymer are used preferably, but the polymer (A) is not limited thereto. Such a composition has excellent properties such as formability possessed by conventional thermoplastic elastomers and the composition can be cured after formation or adhesion, resulting in form a cured product having excellent heat resistance and low compression set.

When the curable composition is a reactive synthetic rubber, as the polymer (A) containing a cross-linkable silyl group, for example, a polymer obtained by introducing a cross-linkable silyl group into a synthetic rubber known in the art such as polybutadiene, poly(vinyl chloride), polyisoprene, a vinyl chloride - vinyl acetate copolymer, a vinyl chloride - acrylonitrile copolymer, a poly(n-butyl acrylate), a methyl methacrylate - butyl acrylate copolymer, a butyl acrylate - butadiene - styrene copolymer, an ethylene - propylene - diene copolymer, and a methyl methacrylate - butadiene - styrene copolymer are used preferably, but the polymer (A) is not limited thereto. Such a reactive rubber provides articles having better heat resistance, heat stability and low compression set than those of conventional synthetic rubbers.

When the curable composition contains a reactive thermoplastic resin, as the polymer (A) containing a cross-linkable silyl group, for example, polymers obtained by introducing a cross-linkable silyl group into a thermoplastic resin used commonly in the art such as vinyl chloride resin, styrene resin, and acrylic resin are used preferably, but the polymer (A) is not limited thereto. Such a reactive thermoplastic resin has the advantages of conventional thermoplastic resin such as excellent formability, and furthermore, has excellent heat resistance, heat stability and low compression set.

[Condensation catalyst (B)]

The condensation catalyst (B) contained in the curable composition of the present invention is a compound exhibiting a catalytic function with respect to a reaction in which compounds having cross-linkable silyl groups are coupled together in the presence of water so as to form a siloxane bond. In particular, when the curable composition of the present invention is a moisture curable composition such as a sealing agent, an adhesive, a pressure sensitive adhesive, a paint, a reactive hot melt adhesive, a reactive thermoplastic resin, and a reactive thermoplastic elastomer, the condensation catalyst serves effectively as a curable catalyst. Examples of the condensation catalyst (B) include, but are not limited to, titanate such as tetrabutyl titanate, and tetrapropyl titanate; organotin compounds such as dibutyltin dilaurate, dibutyltin maleate, dibutyltin diacetate, dibutyltin dimethoxide, dibutyltin bisacetylacetonate, tin octylate, and tin naphthenate; lead compounds such as lead octylate; amines such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, and 1,3-diazabicyclo[5.4.Flundecene-7; carboxylate of the amines; low molecular weight polyamide resins obtained from polybasic acid and excessive polyamine; reaction products of epoxy compound and excessive polyamine; silane coupling agents having an amino group such as γ-aminopropyltrimethoxysilane, and N-(β-aminoethyl) aminopropylmethyl dimethoxysilane. These can be used alone or in combination of two or more. Among these condensation catalysts, organotin compounds are preferable because of their high activities. There is no particular limitation regarding the content of the condensation catalyst in the curable composition of the present invention, but it is preferable that the condensation catalyst is contained in a range from 0.01 to 10 parts by weight with respect to 100 parts by weight of the polymer (A) containing a cross-linkable silyl group in terms of the reactivity.

Examples of the additives include plasticizers, thixotropic agents, heat resistance improvers, stabilizers, antioxidants, UV absorbers, hindered amine light stabilizers (HALS), anti-static agents, flame retardants, colorants, foaming agents, lubricants, mildew proofing agents, nucleating agents, vulcanization accelerators, age resistors, vulcanizing agents, antiscorching agents, peptizing agents, tackifiers, latex coagulants, processing aids, inorganic fillers, silane coupling agents, and rubber materials. These additives are selected as appropriate, depending on the type and the amount of the polymer (A) containing a cross-linkable silyl group and the application in which the curable composition is used.

[Curable composition]

The curable composition of the present invention contains the polymer (A) containing a cross-linkable silyl group and the condensation catalyst (B), and, if necessary, an additive and water or the like. This composition may be a one-component type curable composition that previously contains all the components other than water, is stored airtightly, and is cured by moisture in the air after application. Alternatively, the composition may be a two-component type curable composition in which a main agent containing the polymer (A) containing a cross-linkable silyl group as the main component and a curable agent containing the condensation catalyst (B) and, if necessary, water are prepared separately and are mixed before use.

[Resin composition containing curable composition and at least one of thermoplastic elastomer and thermoplastic resin]

The resin composition of the present invention contains the curable composition and at least one compound selected from the group consisting of thermoplastic elastomers and thermoplastic resins.

Examples of thermoplastic elastomers include, but are not limited to, styrene block copolymer (SBC) such as a styrene - butadiene copolymer (SBS), a styrene - isoprene copolymer (SIS), a styrene - (ethylene-butylene) copolymer (SEBS), and a styrene - (ethylene-propylene) copolymer (SEPS); thermoplastic elastomer olefin (TPO) such as a polypropylene - EPDM copolymer and a polyethylene - EPDM copolymer; thermoplastic elastomer urethane (TPU) such as a caprolactone-based urethane copolymer, an adipic acid-based urethane copolymer, and an ether based urethane copolymer; thermoplastic elastomer polyester (TPEE); thermoplastic elastomer polyamide (TPAE); 1,2-polybutadiene (PB); thermoplastic elastomer polyvinyl chloride (TPVC); thermoplastic elastomer ionomer; thermoplastic elastomer silicone; and acrylic thermoplastic elastomer. These can be used alone or in combination of two or more.

Examples of thermoplastic resins include, but are not limited to, ionomer resins such as Surlyn (manufactured by Du Pont Company), and Himilan (manufactured by Du Pont-Mitsui Polychemicals Company. Ltd.); hydrazide polyacrylate; isobutylene - maleic anhydride copolymer; acrylonitrile-containing resins such as an acrylonitrile - styrene - acrylic rubber copolymer (AAS), an acrylonitrile - EPDM - styrene copolymer (AES), an acrylonitrile - styrene copolymer (AS), an acrylonitrile - butadiene - styrene copolymer (ABS), an acrylonitrile - chlorinated polyethylene - styrene resin (ACS), a vinyl chloride - acrylonitrile copolymer, a vinylidene chloride - acrylonitrile copolymer, a vinyl acetate - acrylonitrile copolymer, and a methyl methacrylate - acrylonitrile copolymer; ABS - vinyl chloride self-extinguishing resins such as Kaneka Enplex (manufactured by KANEKA CORPORATION); ABS heat resistant resins such as Kaneka MUH (manufactured by KANEKA CORPORATION); a methyl methacrylate - butadiene - styrene copolymer (MBS); an ethylene - vinyl chloride copolymer; an ethylene - vinyl acetate copolymer (EVA); a modified ethylene - vinyl acetate copolymer; a chlorinated ethylene - vinyl acetate copolymer; an ethylene - vinyl acetate - vinyl chloride graft copolymer; an ethylene - vinyl alcohol copolymer (EVOH); chlorinated polyvinyl chloride; chlorinated olefin resins such as chlorinated polyethylene and chlorinated polypropylene; carboxyvinyl polymer; ketone resin; norbornene resin; fluororesins such as polytetrafluoroethylene (PTFE), an ethylene fluoride- propylene copolymer, a tetrafluoroethylene - perfluoroalkylvinyl ether copolymer (PFA), polychlorotrifluoroethylene, an ethylene - tetrafluoroethylene copolymer, a low melting

point ethylene - tetrafluoroethylene copolymer, poly(vinylidene fluoride) (PVDF), and poly(vinyl fluoride); polyacetal; polyamide resins such as polyamide 6, polyamide 66, polyamide 610, polyamide 612, polyamide 11, polyamide 12, copolyamide, polyamide MXD 6, polyamide 46, methoxymethylated polyamide and polyamide-imide; polyarylate (PAR); polyimide resins such as polyimide, thermoplastic polyimide, and polyetherimide; poly(etherether ketone); olefin resins such as polyethylene (PE), and polypropylene (PP); polyether resins such as poly(ethylene oxide); polyester resins such as poly(ethylene terephthalate) (PET), poly(butylene terephthalate) (PBT) and poly(ethylene naphthalate); poly(vinylidene chloride); poly(vinyl chloride) (PVC); polycarbonate resins such as polycarbonate (PC); poly(vinyl acetate); styrene resins such as polystyrene (PS) and poly-para-methylstyrene; polysulfone; polyethersulfone; polyaminesulfone; poly-para-vinylphenol; polyallylamine; poly(vinyl alcohol) (PVA); poly(vinyl ether); poly(vinyl butyral) (PVB); poly(vinyl formal) (PVF); poly(phenylene ether); modified poly(phenylene ether); poly(phenylene sulfide; polymethylpentene; acrylic resins such as poly(methylmethacrylate) (PMMA); and various liquid crystal polymers. These can be used alone or in combination of two or more.

By using these thermoplastic elastomers and thermoplastic resins, an elastomer composition or a thermoplastic resin composition having excellent impact resistance, low compression set, heat resistance, weatherability and the like can be obtained. Among the above thermoplastic elastomers and thermoplastic resins, the following elastomers and resins are preferable because of a high degree of general purpose applications, availability, and price thereof and because the processability of the resultant composition is excellent: thermoplastic elastomer styrene, thermoplastic elastomer olefin, thermoplastic elastomer silicone; acrylic thermoplastic elastomers, olefin resins, styrene resins, poly (vinyl chloride), acrylic resins, polyester resins, polyamide resins and polycarbonate resins. Among these, thermoplastic elastomer styrene, thermoplastic elastomer olefin, polycarbonate resins, polyester resins and acrylic resins are particularly preferable because the processability of the elastomer or the resin when blended with the curable composition is good, and the resultant molded product has excellent flame resistance and impact resistance.

When a compound selected from thermoplastic elastomers and thermoplastic resins is blended with the curable composition of the present invention, there is no particular limitation regarding a method for blending these components. For example, they can be blended by dissolving them in an organic solvent or by heating to be melted. Furthermore, the cross-linkable silyl group of the polymer in the curable composition can be crosslinked by mixing with water at the time of blending these components or by allowing the composition to stand for the purpose of curing after the blending or the forming process.

When the resin composition containing the thermoplastic elastomer or the thermoplastic resin is used to form a molded product, various commonly used formation methods can be employed. For example, extrusion molding, compression molding, blow molding, calendering, vacuum forming, injection molding or the like can be used, and molding is performed as appropriate, depending on the application. A molded product obtained by molding the resin composition of the present invention can be used various applications such as pipes, joints, flat plates, corrugated boards, sheets, films, columns, wall materials, floor materials, toys, grips, soles, sporting goods, window frames, doors, containers, automobile parts, electrical equipment housings, lenses, optical components, electrical circuit substrates, electronic components, bottles, bottle caps, packings, gaskets, and electric wire coatings.

## Examples

Hereinafter, specific examples of the present invention will be described, but the present invention is not limited to the following examples.

In this example, the weight average molecular weight (Mw), the number average molecular weight (Mn) and the molecular weight distribution (Mw/Mn) were obtained by gel permeation chromatography (GPC) measurement. In the GPC measurement, a GPC system manufactured by Waters Associates was used, a polystyrene column Shodex K-806 and K-805 (manufactured by Showa Denko K.K.) was used as the column, chloroform was used as the eluent and the molecular weights are provided as polystyrene equivalents.

AMX-400 (manufactured by Bruker Companies) was used as a NMR measuring device.

In this example, the Izod impact strength was measured according to the method described in ASTM D256-56, using a sample provided with a V notch, and an average of values obtained by measurement with n = 5 was employed. The Gardner's strength was measured according to the method described in ASTM D3029-84-GB, using a weight of 700 g at 23°C with n = 40. The melt viscosity was measured according to the method described in JIS K-7199 at a shear rate of $1216s^{-1}$, using a capillary rheometer. For the spiral flow, the cylinder temperature was set to 250 °C, the mold temperature to 70 °C, and the injection pressure to 608 $kgf/cm^2$ (59.6 MPa) for injection molding of a square-shaped spiral having a thickness of 3 mm, and the molding flowability was evaluated by the length (mm) thereof.

### (Production Example 1)

In a 1 L reactor provided with a stirrer, a thermometer, a nitrogen gas inlet tube and a reflux condenser, 256.4

g of n-butyl acrylate, 278 mg of dimethyl azobisisobutyrate, 1.50 g of the compound shown by formula (12):

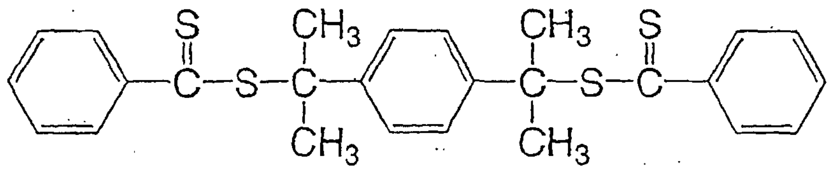

(12)

and 286 mL of toluene were placed, and the system was purged with nitrogen. The reaction mixture was heated at 80°C for 4 hours while being stirred. Toluene was removed from the reaction mixture by distillation under reduced pressure, and thus a polymer with Mw = 52400, Mn = 42300, and Mw/Mn = 1.24 was obtained in an amount of 132 g. $^1H$ NMR measurement confirmed that thiocarbonylthio groups were introduced to both ends of poly(n-butyl acrylate), and the introduction rate was 95% on the basis of total number of molecular ends.

The thus obtained poly(n-butyl acrylate) having thiocarbonylthio groups at both molecular ends was dissolved in an amount of 132 g in 400 mL of toluene, and 30 g of monoethyl amine was added thereto, and then the mixture was stirred at 10°C for 5 hours. The residual monoethyl amine and the toluene were removed by distillation under reduced pressure, and the $^1H$ NMR measurement of the obtained polymer confirmed that the polymer was poly(n-butyl acrylate) having mercapto groups at both ends, and that the introduction ratio of the mercapto groups was 93% on the basis of total number of molecular ends.

The thus obtained poly(n-butyl acrylate) having mercapto groups at both ends was dissolved in an amount of 126 g in 500 mL of dried toluene, 128 mg of allyl mercaptan was added thereto in an air atmosphere, and 5.0 mg of lead dioxide was added. Then, the mixture was heated while being stirred at 80°C for 12 hours. The $^1H$ NMR spectrum of the polymer obtained by removing volatile substances under reduced pressure confirmed that the polymer was poly (n-butyl acrylate) having allyl groups at both ends via disulfide bonds. The introduction ratio of the allyl groups was 90% on the basis of total number of molecular ends.

Next, 50.6 g of the polymer, 1.4 mL (11.1 mmol) of dimetoxymethyl hydrosilane, 0.4 mL (3.7 mmol) of methyl orthoformate (dehydrating agent) and a platinum catalyst were placed in a 100 mL pressure resistant glass reaction vessel. The amount of the platinum catalyst was $10^{-4}$ moles with respect to one mole of the unsaturated group of the polymer. This was heated at 100°C for three hours. The volatile substances of the obtained reaction mixture were removed by distillation under reduced pressure, and poly(n-butyl acrylate) having silyl group at both ends was obtained as the polymer (A) containing a cross-linkable silyl group. The average number of the silyl groups introduced per one molecule of the poly(n-butyl acrylate) was 1.7 according to the $^1H$ NMR analysis.

(Production Example 2)

In a 1L reactor provided with a stirrer, a thermometer, a nitrogen gas inlet tube and a reflux condenser, 256.4 g of n-butyl acrylate, 139 mg of dimethyl azobisisobutyrate, 0.75 g of the compound shown by formula (12):

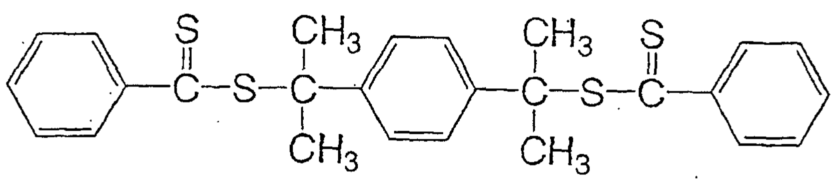

(12)

and 300 mL of toluene were placed, and the system was purged with nitrogen. The reaction mixture was heated at 80°C for 6 hours while being stirred. The reaction mixture was sampled, and GPC measurement confirmed that a polymer with Mw = 69600, Mn = 52700, and Mw/Mn = 1.32 was formed. $^1H$ NMR measurement confirmed that in this polymer, thiocarbonylthio groups were introduced to both molecular ends of poly(n-butyl acrylate), and the introduction rate was 92% on the basis of total number of molecular ends.

Then, 30 g of diethyl amine was added thereto, and the mixture was stirred at 30°C for 8 hours. The residual diethyl amine and the toluene were removed by distillation under reduced pressure, and the $^1H$ NMR measurement of the obtained polymer confirmed that the polymer was poly(n-butyl acrylate) having mercapto groups at both ends, and

that the introduction ratio of the mercapto groups was 90% on the basis of total number of molecular ends.

The thus obtained poly(n-butyl acrylate) having mercapto groups at both ends was dissolved in an amount of 158 g in 500 mL of dried toluene, 128 mg of allyl mercaptan was added thereto in an air atmosphere, and 5.0 mg of lead dioxide was added. Then, the mixture was heated while being stirred at 80°C for 12 hours. The $^1H$ NMR spectrum of the polymer obtained by removing volatile substances under reduced pressure confirmed that the polymer was poly (n-butyl acrylate) having allyl groups at both ends via disulfide bonds. The introduction ratio of the allyl groups was 90% on the basis of total number of molecular ends.

Next, 63.3 g of the polymer, 1.4 mL (11.1 mmol) of dimetoxymethyl hydrosilane, 0.4 mL (3.7 mmol) of methyl orthoformate and a platinum catalyst were placed in a 100 mL pressure resistant glass reaction vessel. The amount of the platinum catalyst was $10^{-4}$ moles with respect to one mole of the unsaturated group of the polymer. This was heated at 100°C for three hours. Volatile substances of the obtained reaction mixture were removed by distillation under reduced pressure, and poly(n-butyl acrylate) having silyl group at both ends was obtained as the polymer (A) containing a cross-linkable silyl group. The average number of the silyl groups introduced per one molecule of the poly (n-butyl acrylate) was 1.6 according to the $^1H$ NMR analysis.

(Production Example 3)

In a 1 L reactor provided with a stirrer, a thermometer, a nitrogen gas inlet tube, a reflux condenser, and a dropping funnel, 410 mg of sodium dodecyl sulfonate, and 400 g of distilled water were placed, and the reaction vessel was purged with nitrogen while heating and stirring at 80°C. Then, 1.08 g of the compound shown by formula (13):

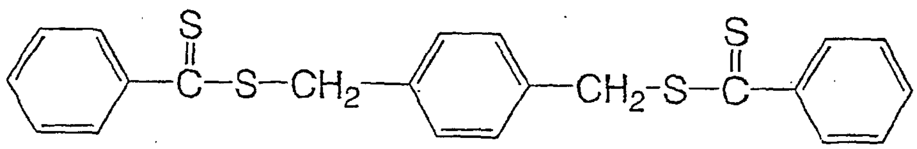

(13)

was dissolved in 25.6 g of n-butyl acrylate and added thereto. The mixture was stirred under a nitrogen stream at 80 °C for 20 minutes, and then 432 mg of 4,4'-azobis(4-cyanovaleric acid) was added thereto together with 25 g of distilled water. At the time when the mixture was stirred at 80°C for 30 minutes, a mixed solution of 51.3 g of n-butyl acrylate and 52.1 g of 2-methoxyethyl acrylate was dropped through the dropping funnel over 1.5 hours. After further stirring at 80 °C for 4 hours, the resultant emulsion was cooled to room temperature, followed by salting-out, filtration, and washing, so that an n-butyl acryalte/2-methoxyethyl acrylate random copolymer having thiocarbonylthio groups at both ends was obtained. The GPC analysis and $^1H$ NMR analysis confirmed that this polymer had Mw = 62800, Mn = 53200, and Mw/Mn = 1.18, and the introduction ratio of the thiocarbonylthio groups was 92% on the basis of total number of molecular ends.

Then, this polymer having thiocarbonylthio groups at both ends was dissolved in an amount of 85 g in 100 mL of toluene, and 10 g of monoethyl amine was added thereto, and then the mixture was stirred at 5°C for 10 hours, so that an n-butyl acrylate/2-methoxyethyl acrylate random copolymer having mercapto groups at both ends was obtained.

The thus obtained copolymer having mercapto groups at both ends was dissolved in an amount of 79 g in 300 mL of dried toluene, 64 mg of allyl mercaptan was added thereto in an air atmosphere, and 2.5 mg of lead dioxide was added. Then, the mixture was heated while being stirred at 80°C for 12 hours. The $^1H$ NMR spectrum of the polymer obtained by removing volatile substances under reduced pressure confirmed that the polymer was an n-butyl acrylate/2-methoxyethyl acrylate random copolymer having allyl groups at both ends via disulfide bonds. The introduction ratio of the allyl groups was 89% on the basis of total number of molecular ends.

Next, 63.3 g of the polymer, 1.4 mL (11.1 mmol) of dimethoxymethyl hydrosilane, 0.4 mL (3.7 mmol) of methyl orthoformate and a platinum catalyst were placed in a 100 mL pressure resistant glass reaction vessel. The amount of the platinum catalyst was $10^{-4}$ moles with respect to one mole of the unsaturated group of the polymer. This was heated at 100°C for three hours. The volatile substances of the obtained reaction mixture were removed by distillation under reduced pressure, and an n-butyl acrylate/2-methoxyethyl acrylate random copolymer having silyl groups at both ends was obtained as the polymer (A) containing a cross-linkable silyl group. The average number of the silyl groups introduced per one molecule of the poly(n-butyl acrylate) was 1.7 according to the $^1H$ NMR analysis.

(Example 1)

Dibutyltin dimethoxide was added and mixed as a curing catalyst in an amount of 1 part by weight with respect to 100 parts by weight of poly(n-butyl acrylate) having dimethoxymethylsilyl groups at both ends that was synthesized in Production Example 1, and the mixture was poured into a mold and subjected to defoaming under reduced pressure, and then allowed to stand in air atmosphere at room temperature for 4 days. Thus, a uniform cured product sheet having rubber elasticity was obtained. Then, 2 (1/3) type dumbbell specimens were stamped out from the cured product sheet, and tensile tests were performed using an autograph manufactured by Shimazu Corporation (measurement conditions: 23°C, 200 mm/min). The breaking strength was 0.48 MPa, and the elongation at rupture was 27%. Separately, two marble plates (15 cm × 5 cm × 2 cm each) were attached to each other by the use of the same curable composition, and irradiated with ultraviolet rays for 1000 hours with a sunshine weatherometer (manufactured by SUGA TEST INSTRUMENTS CO., LTD). No deformation such as cracks and peeling, and no change of color were observed, and there was no staining to the stone material.

(Example 2)

Dibutyltinbisacetylacetonate U-220 (manufactured by NITTO KASEI CO., LTD) was added as a curing catalyst in an amount of 1 part by weight to 100 parts by weight of poly(n-butyl acrylate) having dimethoxymethylsilyl groups at both ends that was synthesized in Production Example 2, and 0.5 parts by weight of water were added thereto, and after these components were mixed sufficiently, the mixture was poured into a mold and subjected to defoaming under reduced pressure. The mixture was allowed to stand at room temperature for 2 days, and then heated at 50°C for 20 hours. Thus, a uniform cured product sheet having rubber elasticity was obtained. Then, 2 (1/3) type dumbbell specimens were stamped out from the cured product sheet, and tensile tests were performed using an autograph manufactured by Shimazu Corporation (measurement conditions: 23°C, 200 mm/min). The breaking strength was 0.45 MPa, and the elongation at rupture was 33%.

(Example 3)

An n-butyl acrylate/2-methoxyethyl acrylate random copolymer having dimethoxysilyl groups at both ends that was synthesized in Production Example 3 was poured into a mold and subjected to defoaming under reduced pressure. It was allowed to stand at room temperature for 7 days, and then heated at 50°C for 10 hours. Thus, a uniform cured product sheet having rubber elasticity was obtained. Then, 2 (1/3) type dumbbell specimens were stamped out from the cured product sheet, and tensile tests were performed using an autograph manufactured by Shimazu Corporation (measurement conditions: 23°C, 200 mm/min). The breaking strength was 0.40 MPa, and the elongation at rupture was 62%.

(Examples 4 to 6)

First, 12 parts by weight of the polymer (A) containing a cross-linkable silyl group obtained in Production Examples 1, 2 or 3 and 0.2 parts by weight of dibutyltin bisacetylacetonate were added to a mixture containing 100 parts by weight of vinyl chloride resin S1008 (manufactured by Kaneka Corporation), 2.5 parts by weight of dibutyltin malate as a stabilizer, 0.5 parts by weight of Hoechst Wax E (manufactured by Hoechst Japan Ltd.) as a lubricant, 2.0 parts by weight of PA-20 (manufactured by Kaneka Corporation) as a processing aid, 3.0 parts by weight of titanium oxide as a pigment. Then, the mixture was kneaded with rolls at a predetermined temperature of 180°C for 5 minutes and formed into sheets. The obtained sheets were molded by hot pressing at a predetermined temperature of 190°C, so that a molded article having a thickness of 5 mm was prepared for property evaluation. Table 1 shows the Izod impact strength measured at 23 °C.

(Comparative Example 1)

According to the process of Examples 4 to 6, molded articles were prepared without using the polymer (A) containing a cross-linkable silyl group, and the Izod impact strength was measured. Table 1 shows the results.

Table 1

| | Polymer containing a cross-linkable silyl group | Izod impact strength (kJ/$m^2$) |
|---|---|---|
| Example 4 | Production Example 1 | 15.7 |

Table 1 (continued)

| | Polymer containing a cross-linkable silyl group | Izod impact strength ($kJ/m^2$) |
|---|---|---|
| Example 5 | Production Example 2 | 13.7 |
| Example 6 | Production Example 3 | 11.8 |
| Comparative Example 1 | - | 2.9 |

Table 1 shows that since the polymer (A) containing a cross-linkable silyl group serves as a modifier, the molded article formed from the curable composition of the present invention containing the polymer has high impact resistance.

(Examples 7 to 9)

First, 95 parts by weight of polycarbonate resin LEXAN 141R-111 (manufactured by GE plastics Japan Ltd.) as a thermoplastic resin, and 0.3 parts by weight of Topanol CA (manufactured by REPPLE Co., Ltd) and 0.3 parts by weight ofAdekastab PEP-36 (Asahi Denka Kogyo K.K.) as antioxizing agents were provided. Then, 5 parts by weight of the polymer (A) containing a cross-linkable silyl group obtained in Production Example 1 or 2, and 0.1 parts by weight of dibutyltin diacetate were mixed with the above-mentioned substances, and the mixture was kneaded and extruded at a predetermined temperature of 280°C using a twin screw extruder with a vent (32 mm, L/D = 25.5) and formed into pellets. The obtained pellets were dried at 80°C for 15 hours, and then were injection-molded at 280°C, so that a molded article (thickness of 1/4 inches) was prepared for property evaluation. Table 2 shows the Izod impact strength measured at 0°C of the obtained molded article and the melt viscosity of the pellets at a predetermined temperature of 280°C. Furthermore, the transparency of this molded article was visually evaluated. Table 2 shows the results. The evaluation of the transparency in Table 2 was as follows:◎ high transparency, ○ normal transparency, Δ slightly opaque, and × opaque.

(Comparative Example 2)

According to the process of Examples 7 to 9, a molded article was prepared without using the polymer (A) containing a cross-linkable silyl group, and the same evaluations as in Examples 7 to 9 was performed. Table 2 shows the results.

Table 2

| | Polymer containing a cross-linkable silyl group | Izod impact strength ($kJ/m^2$) | Melt viscosity (poise) | Transparency |
|---|---|---|---|---|
| Example 7 | Production Example 1 | 12.7 | 3300 | ○ |
| Example 8 | Production Example 2 | 10.8 | 3500 | ○ |
| Example 9 | Production Example 3 | 15.7 | 3200 | ◎ |
| Comparative Example 2 | - | 2.9 | 5100 | ◎ |

Table 2 shows that since the polymer (A) containing a cross-linkable silyl group serves as a modifier, the molded article formed from the curable composition of the present invention containing the polymer has excellent impact resistance, formability and transparency.

Industrial Applicability

The curable composition of the present invention comprises a polymer (A) having a cross-linkable silyl group that has a cross-linkable silyl group at its molecular ends at a high ratio and a condensation catalyst (B) as the main components, so that the composition has excellent curing properties. A molded article obtained from this composition or a resin composition containing the composition and at least one compound of a thermoplastic elastomer and a thermoplastic resin has excellent oil resistance, heat resistance, weatherability, durability, low staining properties, and low compression set, and can be easily handled. Furthermore, the impact resistance and the processability are significantly improved, and the transparency is excellent. A method for producing the polymer (A) containing a cross-linkable silyl group contained in the composition of the present invention is simple. The polymer can be produced not only by solution polymerization, but also aqueous polymerization such as emulsion polymerization and suspension polymerization, and a purification process can be simplified, which leads to a low production cost. In the case of industrial production, the safety is high and low cost production is possible.

The cured product obtained from the curable composition of the present invention or obtained from a resin composition containing the composition can be used for various applications, depending on its properties. Examples thereof include, but are not limited to, sealing agents, adhesives, pressure sensitive adhesives, elastic adhesives, viscous adhesives, hot melt adhesives, reactive hot melt adhesives, reactive thermoplastic elastomers, reactive synthetic rubbers, and reactive thermoplastic resins; various molded articles such as hoses, sheets, films, flat plates, corrugated boards, pipes, window frames, soles, sporting goods, fibers, toys, automobile parts, gaskets, packing, foamed products, artificial marble, alternative resin for glass, containers, bottles, bottle caps, artificial hair, artificial skin, columns, wall materials, floor materials, grips, doors, electrical equipment housing, lenses, optical components, electric circuit substrates, electronic components, and electric wire coating materials; modifiers such as asphalt modifiers, resin modifiers, rubber modifiers and cement modifiers; paints and coatings; and potting materials of electronic components.

## Claims

**1.** A curable composition comprising a polymer (A) containing a cross-linkable silyl group and a condensation catalyst (B),

wherein the polymer (A) containing a cross-linkable silyl group is produced by a process comprising the steps of:

(i) initiating a reversible addition-fragmentation chain transfer polymerization of a radical polymerizable monomer in the presence of a thiocarbonylthio compound, and
(ii) adding an unsaturated compound containing a cross-linkable silyl group for copolymerization when a consumed amount of the radical polymerizable monomer by the polymerization has reached a level of 80% or more;

wherein the unsaturated compound containing a cross-linkable silyl group is a compound having a radical polymerizable unsaturated group and a cross-linkable silyl group shown by general formula (1):

$$-[Si(R^1)_{2-b}(Y^1)_bO]_m-Si(R^2)_{3-a}(Y^2)_a \qquad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$- (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and $a + mb \geq 1$).

**2.** The curable composition of claim 1, wherein the consumed amount of the radical polymerizable monomer in the step (ii) is 95% or more.

**3.** A curable composition comprising a polymer (A) containing a cross-linkable silyl group and a condensation catalyst (B),

wherein the polymer (A) containing a cross-linkable silyl group is produced by a process comprising the steps of:

(I) initiating a reversible addition-fragmentation chain transfer polymerization of a radical polymerizable monomer in the presence of a thiocarbonylthio compound,
(II) adding a diene compound for copolymerization when a consumed amount of the radical polymerizable monomer by the polymerization has reached a level of 80% or more so as to prepare a polymer having an unsaturated group; and

(III) adding a hydrosilane compound containing a cross-linkable silyl group to the polymer having an unsaturated group so as to cause a hydrosilylation;

wherein the hydrosilane compound containing a cross-linkable silyl group is a compound having a hydrosilyl group and a cross-linkable silyl group shown by general formula (1):

$$-[Si(R^1)_{2-b}(Y^1)_bO]_m-Si(R^2)_{3-a}(Y^2)_a \quad (1)$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$- (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and a + mb ≥1).

**4.** The curable composition of claim 3, wherein the consumed amount of the radical polymerizable monomer in the step (II) is 95% or more.

**5.** A curable composition comprising a polymer (A) containing a cross-linkable silyl group and a condensation catalyst (B),

wherein the polymer (A) containing a cross-linkable silyl group is produced by a process comprising the steps of:

[I] subjecting a radical polymerizable monomer to a reversible addition-fragmentation chain transfer polymerization in the presence of a thiocarbonylthio compound to prepare a polymer having a thiocarbonylthio group,
[II] converting the thiocarbonylthio group of the polymer having a thiocarbonylthio group to a mercapto group or a mercaptide group to prepare a polymer having a mercapto group or a mercaptide group;
[III] reacting the polymer having a mercapto group or a mercaptide group with an unsaturated compound containing a functional group so as to prepare a polymer having an unsaturated group, wherein the unsaturated compound has a functional group that can form a bond together with a mercapto group or a mercaptide group and has an unsaturated group; and
[IV] adding a hydrosilane compound containing a cross-linkable silyl group to the polymer having an unsaturated group so as to cause a hydrosilylation;

wherein the hydrosilane compound containing a cross-linkable silyl group is a compound having a hydrosilyl group and a cross-linkable silyl group shown by general formula (1):

$$-[Si(R^1)_{2-b}(Y^1)_bO]_m -Si(R^2)_{3-a}(Y^2)_a \quad (1=$$

(wherein $R^1$ and $R^2$ are each independently an alkyl group having 1 to 20 carbon atoms, an aryl group having 6 to 20 carbon atoms, an aralkyl group having 7 to 20 carbon atoms or a triorganosiloxy group shown by $(R^3)_3Si$- (wherein $R^3$ is a monovalent hydrocarbon group having 1 to 20 carbon atoms, and the three $R^3$s can be the same or different), and when a plurality of $R^1$ or $R^2$ is present, they can be the same or different; $Y^1$ and $Y^2$ are each independently a hydroxyl group or a hydrolyzable group, and when a plurality of $Y^1$ or $Y^2$ is present, they can be the same or different; a is an integer of 0 to 3, b is an integer of 0 to 2; m is an integer of 0 to 19; and a + mb ≥1).

**6.** The curable composition of claim 5, wherein the reaction that converts the thiocarbonylthio group to a mercapto group or a mercaptide group is performed using a treatment agent that is at least one compound selected from the group consisting of a base, an acid, and a hydrogen-nitrogen bond-containing compound.

**7.** The curable composition of claim 6, wherein the treatment agent is a hydrogen-nitrogen bond containing compound, wherein the compound is at least one compound selected from the group consisting of ammonia, a primary amine having a boiling point of 100°C or less, and a secondary amine having a boiling point of 100°C or less.

**8.** The curable composition of any one of claims 1 to 7, wherein the thiocarbonylthio compound is at least one compound selected from the group consisting of a compound shown by the following general formula (2) and a compound shown by the following general formula (3):

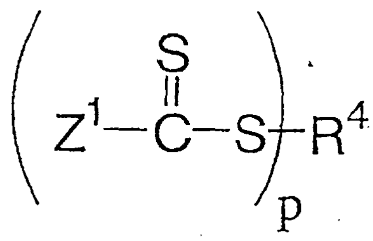

(2)

(wherein $R^4$ is an organic group of a valence of p having at least one carbon atom; $Z^1$ is a hydrogen atom, a halogen atom or a monovalent organic group having at least one carbon atom; p is an integer of 1 or more; and when p is 2 or more, a plurality of $Z^1$ may be the same or different from each other),

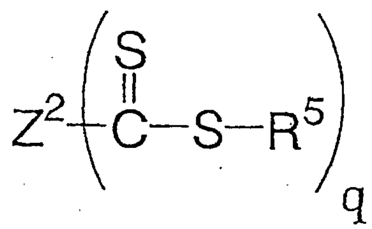

(3)

(wherein $R^5$ is a monovalent organic group having at least one carbon atom; $Z^2$ is an oxygen atom (in the case of q = 2), a sulfur atom (in the case of q = 2), a nitrogen atom (in the case of q = 3) or an organic group of a valence of q having at least one carbon atom; q is an integer of 2 or more; and a plurality of $R^5$ may be the same or different from each other).

**9.** The curable composition of any one of claims 1 to 8, wherein the thiocarbonylthio compound is a compound shown by the following general formula (4):

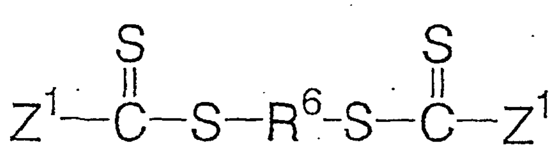

(4)

(wherein $R^6$ is a bivalent organic group having at least one carbon atom; $Z^1$ is a hydrogen atom, a halogen atom, or a monovalent organic group having at least one carbon atom; and $Z^1$ may be the same or different from each other).

**10.** The curable composition of any one of claims 1 to 9, wherein the radical polymerizable monomer is at least one compound selected from the group consisting of an acrylate, a methacrylate, acrylonitrile, methacrylonitrile, vinyl acetate, styrene, $\alpha$-methyl styrene, acrylamide, and methacrylamide.

**11.** The curable composition of any one of claims 1 to 10, wherein a molecular weight distribution (Mw/Mn) that is a ratio of a weight average molecular weight (Mw) to a number average molecular weight (Mn) obtained by gel permeation chromatography of the polymer (A) containing a cross-linkable silyl group is 1.8 or less.

**12.** The curable composition of any one of claims 1 to 11, wherein the number average molecular weight (Mn) obtained by gel permeation chromatography of the polymer (A) containing a cross-linkable silyl group is in a range from 1000 to 100000.

**13.** A resin composition comprising the curable composition of any one of claims 1 to 12 and at least one compound selected from the group consisting of a thermoplastic elastomer and a thermoplastic resin.

## INTERNATIONAL SEARCH REPORT

International application No.
PCT/JP02/11855

A. CLASSIFICATION OF SUBJECT MATTER
Int.Cl[7] C08F8/42, C08F2/38, C08L101/00, C08F220/00

According to International Patent Classification (IPC) or to both national classification and IPC

B. FIELDS SEARCHED

Minimum documentation searched (classification system followed by classification symbols)
Int.Cl[7] C08F8/00-8/50, C08F2/00-2/60

Documentation searched other than minimum documentation to the extent that such documents are included in the fields searched

Electronic data base consulted during the international search (name of data base and, where practicable, search terms used)
WPI(L)

C. DOCUMENTS CONSIDERED TO BE RELEVANT

| Category* | Citation of document, with indication, where appropriate, of the relevant passages | Relevant to claim No. |
|---|---|---|
| P,X | JP 2002-241568 A (Kaneka Corp.), 28 August, 2002 (28.08.02), Claims (Family: none) | 1-13 |
| P,X | JP 2002-265508 A (Kaneka Corp.), 18 September, 2002 (18.09.02), Claims (Family: none) | 1-13 |
| P,X | WO 02/72642 A1 (Kaneka Corp.), 19 September, 2002 (19.09.02), Claims & JP 2002-265523 A Claims | 1-13 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 February, 2003 (14.02.03) | 04 March, 2003 (04.03.03) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/11855

C (Continuation). DOCUMENTS CONSIDERED TO BE RELEVANT

| Category* | Citation of document, with indication, where appropriate, of the relevant passages | Relevant to claim No. |
|---|---|---|
| E,X | JP 2003-12719 A (Kaneka Corp.),<br>15 January, 2003 (15.01.03),<br>Claims<br>(Family: none) | 1-13 |
| E,X | JP 2003-41224 A (Kaneka Corp.),<br>13 February, 2003 (13.02.03),<br>Claims<br>(Family: none) | 1-13 |
| A | WO 98/01478 A1 (E.I. Dupont De Nemours and Co.),<br>15 January, 1998 (15.01.98),<br>Claims<br>& JP 2000-515181 A<br>Claims | 1-13 |
| A | JP 62-149708 A (Asahi Chemical Industry Co., Ltd.),<br>03 July, 1987 (03.07.87),<br>Pages 4 to 6<br>(Family: none) | 1-13 |
| A | WO 99/58588 A1 (The University of Melbourne),<br>18 November, 1999 (18.11.99),<br>Claims<br>& JP 2002-514667 A<br>Claims | 1-13 |
| A | WO 99/31144 A1 (E.I. Du Pont de Nemours & Co.),<br>24 June, 1999 (24.06.99),<br>Claims<br>& JP 2002-508409 A<br>Claims | 1-13 |

Form PCT/ISA/210 (continuation of second sheet) (July 1998)